# EUROPÄISCHE PATENTSCHRIFT

(11) **EP 4 384 427 B1**
(45) Veröffentlichungstag und Bekanntmachung des Hinweises auf die Patenterteilung: **30.07.2025**
(21) Anmeldenummer: 22760713.2
(22) Anmeldetag: 02.08.2022
(51) Int. Cl.: B60T 10/02, B60T 1/087, F16D 57/04, B60T 5/00

(54) **BREMSEINRICHTUNG FÜR EIN KRAFTFAHRZEUG**
VEHICLE BRAKE DEVICE
DISPOSITIF DE FREINAGE POUR VEHICULE AUTOMOBILE

(30) Priorität: 12.08.2021 DE 102021004154
(43) Veröffentlichungstag der Anmeldung: 19.06.2024
(73) Patentinhaber: Daimler Truck AG, 70771 Leinfelden-Echterdingen (DE)
(72) Erfinder: STEFFENS, Frank, 73760 Ostfildern (DE)
(74) Vertreter: JENSEN & SON
(86) Internationale Anmeldenummer: PCT/EP2022/071612
(87) Internationale Veröffentlichungsnummer: WO 2023/016850

(56) Entgegenhaltungen:
- WO-A1-2015/126312
- WO-A1-2019/074419
- WO-A1-2020/060462
- DE-A1- 10 141 794
- DE-A1- 102018 103 592
- DE-A1- 102020 211 041
- DE-A1- 102021 121 407

## Beschreibung

Die Erfindung betrifft eine Bremseinrichtung für ein Kraftfahrzeug gemäß dem Oberbegriff von Patentanspruch 1.

Die DE 101 41 794 A1 offenbart einen hydrodynamischen Retarder für ein Kraftfahrzeug mit einem Kreislauf zur Steuerung des Retarders, der eine Hydraulikpumpe, einen Wärmetauscher, ein Ventil und eine Steuer- und Regeleinheit enthält, wobei das Fördervolumen der Pumpe derart verstellbar ist, dass der Volumenstrom abhängig von der Fahrzeuggeschwindigkeit beziehungsweise Gelenkwellendrehzahl oder Retarderdrehzahl einstellbar ist.

Darüber hinaus zeigt die DE 10 2020211041 A1 eine Bremsvorrichtung mit einem hydrodynamischen Retarder, bei dem ein Steuergerät sowohl über Ventile die Befüllung des Retarders als auch die Kupplung steuert.

Weiterhin zeigt die DE 10 2021121407 A1 einen Fahrzeug-Kühlmittelkreislauf zum Abführen von Wärme einer Fahrzeugkomponente. Bei dieser Komponente kann es sich um einen Retarder handeln. Dabei wird zum Anheben des Fluiddrucks im Kreislauf eine Impellerpumpe eingesetzt.

Aus der WO 2019/074419 A1 ist ferner ein hydrodynamischer Retarder mit einem ventilgesteuerten Fördervolumen bekannt. Der Retarder umfasst ein Fördersystem mit einem Arbeitsraum sowie einen Druckgenerator, der mit dem Arbeitsraum verbunden ist. Dieser ist ausgelegt um die Entleerung des Arbeitsraum zu erreichen.

Aufgabe der vorliegenden Erfindung ist es, eine Bremseinrichtung für ein Kraftfahrzeug zu schaffen, sodass Bauraum und Kosten der Bremseinrichtung besonders gering gehalten werden können.

Diese Aufgabe wird erfindungsgemäß durch eine Bremseinrichtung für ein Kraftfahrzeug mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft eine Bremseinrichtung für ein Kraftfahrzeug, welches vorzugsweise als Nutzfahrzeug, insbesondere als schweres Nutzfahrzeug, ausgebildet ist. Das Kraftfahrzeug kann als Kraftwagen, insbesondere als Personenkraftwagen, Nutzkraftwagen oder Lastkraftwagen, oder als Personenbus ausgebildet sein. Bei dem Kraftfahrzeug kann es sich beispielweise um ein batterieelektrisches Fahrzeug oder um ein Brennstoffzellenfahrzeug oder um ein Hybridfahrzeug handeln. Beispielweise kann das Kraftfahrzeug eine Verbrennungskraftmaschine aufweisen, mittels welcher das Kraftfahrzeug zumindest teilweise antreibbar ist. Vorzugsweise ist die Bremseinrichtung dazu vorgesehen, das Kraftfahrzeug zu verzögern. Dadurch kann eine Geschwindigkeit, mit welcher das Kraftfahrzeug auf einer Fahrbahn fährt, mittels der Bremseinrichtung vermindert werden. Dabei kann das Kraftfahrzeug mittels der Bremseinrichtung beispielweise bis zu seinem Stillstand verzögert werden.

Die Bremseinrichtung umfasst einen von einem Fluid durchströmbaren und wenigstens zwei von dem Fluid durchströmbare Leitungsstrecken aufweisenden Fluidpfad, welcher insbesondere als Hydrauliksystem bezeichnet werden kann. In dem Fluidpfad ist wenigstens ein insbesondere als Ölpumpe bezeichnetes Pumpenelement zum Hindurchfördern des Fluids durch den Fluidpfad angeordnet. Vorzugsweise ist das Pumpenelement als elektrische Pumpe ausgebildet.

In dem Fluidpfad ist wenigstens eine von dem Fluid durchströmbare, wenigstens einen Ventileingang und wenigstens einen von dem Ventileingang beabstandeten Ventilausgang aufweisende und zwischen wenigstens zwei Ventilstellungen bewegbare Ventileinrichtung angeordnet. Die Ventileinrichtung ist mittels einer ersten der Leitungsstrecken fluidisch mit dem Pumpenelement verbunden beziehungsweise verbindbar. Mit anderen Worten ausgedrückt ist die erste Leitungsstrecke dazu vorgesehen, einen von dem Fluid durchströmbaren Pumpenausgang des Pumpenelements fluidisch mit dem Ventileingang der Ventileinrichtung zu verbinden. Der Ventileingang und der Ventilausgang sind von dem Fluid durchströmbar.

Die Bremseinrichtung umfasst wenigstens einen Retarder, welcher einen Stator, einen separat von dem Stator ausgebildeten und um eine Drehachse relativ zu einem Gehäuseelement des Retarders verdrehbaren Rotor und einen Retardereingang aufweist.

Über den Retardereingang kann das Fluid dem Retarder zugeführt werden. Über den Retardereingang ist der Retarder mittels der zweiten der Leitungsstrecken fluidisch über den Ventilausgang mit der Ventileinrichtung verbunden beziehungsweise verbindbar. Mit anderen Worten ausgedrückt ist die zweite Leitungsstrecke dazu vorgesehen, den Ventilausgang der Ventilvorrichtung fluidisch mit dem Retardereingang zu verbinden. Dadurch, dass die Bremseinrichtung den Retarder aufweist, kann die Bremseinrichtung insbesondere als Retardersystem bezeichnet werden.

In einer ersten der Ventilstellungen der Ventileinrichtung ist der Ventileingang mit dem Ventilausgang fluidisch verbunden, wodurch das die erste Leitungsstrecke durchströmende Fluid über den Ventileingang durch die Ventileinrichtung hindurch, über den Ventilausgang und das zweite Leitungselement dem Retardereingang zuführbar ist. In der zweiten Ventilstellung der Ventileinrichtung ist der Ventileingang nicht fluidisch mit dem Ventilausgang verbunden, wodurch das die erste Leitungsstrecke durchströmende Fluid nicht durch die Ventileinrichtung hindurch strömen kann und somit nicht über das zweite Leitungselement dem Retardereingang zugeführt werden kann. In der ersten Ventilstellung durchströmt das Fluid die erste Leitungsstrecke in einer ersten Strömungsrichtung der ersten Leitungsstrecke.

Beispielsweise weist die Ventileinrichtung einen von dem Fluid durchströmbaren Durchgangskanal auf, welcher fluidisch mit dem Ventileingang und dem Ventilausgang verbindbar ist. Beispielsweise ist in der ersten Stellung der Durchgangskanal freigegeben, wodurch das die erste Leitungsstrecke durchströmende Fluid über den Ventileingang, über den Durchgangskanal, über den Ventilausgang und über das zweite Leitungselement dem Retardereingang zuführbar ist. Beispielsweise ist der Durchgangskanal in der zweiten Stellung versperrt, wodurch der Ventileingang und der Ventilausgang nicht miteinander verbunden sind. Dadurch kann das die erste Leitungsstrecke durchströmende Fluid in der zweiten Ventilstellung nicht über den Ventileingang, den Durchgangskanal, den Ventilausgang und über das zweite Leitungselement dem Retardereingang zugeführt werden. Die Ventileinrichtung kann insbesondere als Ventilblock bezeichnet werden. Vorzugsweise ist die Ventileinrichtung als Wegeventil ausgebildet.

Um einen Bauraum und Kosten der Bremseinrichtung besonders gering halten zu können, weist die Bremseinrichtung wenigstens ein Kupplungselement auf, über welches der Rotor des Retarders mit einer Antriebswelle des Kraftfahrzeugs koppelbar und von der Antriebswelle entkoppelbar ist, und eine Koppeleinrichtung auf. Die Antriebswelle ist um eine Wellendrehachse der Antriebswelle relativ zu dem Gehäuseelement verdrehbar. Die Antriebswelle kann beispielsweise von einer elektrischen Maschine des Kraftfahrzeugs und/oder von der Verbrennungskraftmaschine angetrieben werden, wodurch über die Antriebswelle Räder des Kraftfahrzeugs angetrieben werden können. Unter dem Koppeln des Rotors mit der Antriebswelle ist zu verstehen, dass der Rotor drehmomentübertragend beziehungsweise drehfest mit der Antriebswelle koppelbar ist, wodurch beispielsweise ein von der Antriebswelle bereitgestelltes Drehmoment auf den Rotor übertragen werden kann.

Mittels der Koppeleinrichtung sind der Rotor und die Antriebswelle durch das Bewegen der Ventileinrichtung in die erste Ventilstellung über das Kupplungselement koppelbar und durch das Bewegen der Ventileinrichtung in die zweite Stellung entkoppelbar. Mit anderen Worten ausgedrückt sind das Kupplungselement und die Ventileinrichtung über die Koppeleinrichtung derart gekoppelt, dass der Rotor und die Antriebswelle in der ersten Ventilstellung über das Kupplungselement miteinander gekoppelt sind und in der zweiten Ventilstellung voneinander entkoppelt sind. Wieder mit anderen Worten ausgedrückt weist die Ventilvorrichtung zumindest ein verstellbares Verbindungsmittel auf, wobei das Kupplungselement über die Koppeleinrichtung derart mit dem Verbindungsmittel gekoppelt ist, dass die erste Ventilstellung ein offenes Kupplungselement bewirkt und die zweite Ventilstellung ein geschlossenes Kupplungselement bewirkt.

Das Kupplungselement ist bezogen auf einen von der Antriebswelle zu dem Rotor verlaufenden Drehmomentenfluss, über welchen das Drehmoment von der Antriebswelle auf den Rotor übertragbar ist, zwischen der Antriebswelle und dem Rotor angeordnet, sodass der Drehmomentenfluss, insbesondere dann, wenn das Kupplungselement geschlossen ist, über das Kupplungselement verläuft. Der Drehmomentenfluss kann alternativ entgegengesetzt von dem Rotor zu der Antriebswelle über das Kupplungselement verlaufen. Das Kupplungselement weist beispielsweise ein erstes Kupplungsteil und ein zweites Kupplungsteil auf. Das erste Kupplungsteil kann drehfest mit der Antriebswelle verbunden sein und das zweite Kupplungsteil kann drehfest mit dem Rotor verbunden sein.

Das Kupplungselement kann geöffnet und geschlossen werden, was bedeutet, dass das Kupplungselement zwischen einem geöffneten Zustand und einem geschlossenen Zustand umgeschaltet werden kann. In dem geöffneten Zustand ist die Antriebswelle von dem Rotor entkoppelt. In dem geschlossenen Zustand ist die Antriebswelle mit dem Rotor gekoppelt. In dem geöffneten Zustand sind die beiden Kupplungsteile des Kupplungselements beziehungsweise die Antriebswelle und der Rotor voneinander entkoppelt, sodass beispielsweise kein Drehmoment oder höchstens ein insbesondere gegenüber Null größeres, erstes Drehmoment zwischen den beiden Kupplungsteilen beziehungsweise zwischen der Antriebswelle und dem Rotor übertragen werden kann. In dem geschlossenen Zustand sind die beiden Kupplungsteile, insbesondere reibschlüssig und/oder formschlüssig und/oder kraftschlüssig, derart drehmomentübertragend miteinander verbunden, dass zwischen den Kupplungsteilen beziehungsweise zwischen der Antriebswelle und dem Rotor ein gegenüber dem ersten Drehmoment größeres, zweites Drehmoment übertragen werden kann.

Unter einer drehfesten Verbindung wird eine Verbindung zweier separat voneinander ausgebildeter Komponenten verstanden, die derart miteinander verbunden sind, dass zumindest Relativdrehungen zwischen den Komponenten sowie vorzugsweise in axialer Richtung und in radialer Richtung der Komponenten Relativbewegungen zwischen den Komponenten unterbleiben beziehungsweise vermieden sind.

Das Kupplungselement kann insbesondere als Kupplung oder als Trennkupplung bezeichnet werden. Das Kupplungselement kann als eine formschlüssige Kupplung, insbesondere als Klauenkupplung, ausgebildet sein. Ferner kann das Kupplungselement als reibschlüssige Kupplung, insbesondere als Reib- oder Lamellenkupplung, ausgebildet sein. Die Antriebswelle kann beispielsweise eine Getriebewelle eines Getriebes des Kraftfahrzeugs sein oder mit der Getriebewelle drehmomentübertragend verbunden beziehungsweise verbindbar sein.

Sind die Antriebswelle und der Rotor über das geschlossene Kupplungselement miteinander gekoppelt, so kann der Rotor von der Antriebswelle angetrieben werden und dadurch um seine Drehachse relativ zu dem Gehäuseelement verdreht werden. Das über den Retardereingang dem Retarder zugeführte Fluid kann mittels des Rotors beschleunigt werden, wodurch der Rotor verzögert werden kann. Beispielsweise kann das Fluid infolge der Beschleunigung im beziehungsweise zu dem Stator geleitet werden und von dem Stator zurück zu dem Rotor geleitet werden, wodurch der Rotor abgebremst werden kann. Mit anderen Worten ausgedrückt beaufschlagt der Rotor das Fluid, wobei der Rotor infolge der Beaufschlagung abgebremst wird. Unter dem Abbremsen kann insbesondere verstanden werden, dass eine Drehgeschwindigkeit des Rotors geringer ist als wenn das Beaufschlagen des Fluids von dem Rotor unterbleibt. Das Abbremsen des Rotors kann insbesondere als Verzögern bezeichnet werden. Infolge des Verzögerns des Rotors wird dadurch, dass das Kupplungselement geschlossen ist, die Antriebswelle von dem Retarder, insbesondere dem Rotor, verzögert beziehungsweise abgebremst. Dadurch kann das Kraftfahrzeug mittels der Bremseinrichtung, insbesondere mittels des Retarders, verzögert werden. Dadurch, dass der Rotor von dem Fluid abgebremst werden kann, kann das Fluid insbesondere als Bremsfluid bezeichnet werden. Der Retarder kann insbesondere als Ölretarder bezeichnet werden.

Bei einem als batterieelektrisches oder als Brennstoffzellenfahrzeug ausgebildeten Kraftfahrzeug ist die Bremseinrichtung vorzugsweise als Zusatzbremse vorgesehen. Darunter kann insbesondere verstanden werden, dass das Kraftfahrzeug wenigstens eine separat von der Bremseinrichtung ausgebildete, insbesondere mechanische, Bremse aufweist, mittels welcher das Kraftfahrzeug verzögert werden kann. Beispielsweise kann beim Bremsen beziehungsweise Verzögern des Kraftfahrzeugs eine Bremsleistung teilweise von der Bremseinrichtung und teilweise von der Bremse bereitgestellt werden. Alternativ oder zusätzlich kann die Bremseinrichtung als Dauerbremse in dem Kraftfahrzeug vorgesehen sein. Dadurch, dass die Bremseinrichtung den Retarder aufweist, kann die Bremseinrichtung insbesondere als Hydrobrake bezeichnet werden.

Der Erfindung liegen insbesondere die folgenden Erkenntnisse und Überlegungen zugrunde: Eine herkömmliche Bremseinrichtung, insbesondere Zusatzbremse oder Dauerbremse, kann insbesondere als elektromotorische Bremse ausgebildet sein, welche insbesondere als elektrische Generatorbremse bezeichnet werden kann. Dabei ist ein Überlastungsschutz für die elektrische Maschine des Kraftfahrzeugs und für einen Energiespeicher, insbesondere eine Batterie, des Kraftfahrzeugs bei vollständig geladenem Energiespeicher vorzusehen. Zudem ist eine Dauerbremsleistung der herkömmlichen Bremseinrichtung von einer maximalen generatorischen Motorleistung der elektromotorischen Bremse, insbesondere inklusive einer Inverterleistung eines Wechselrichters, begrenzt. Dabei können Nebenverbraucher, beispielsweise ein Lüfter, eine maximale Bremsleistung, insbesondere Dauerbremsleistung, der herkömmlichen Bremseinrichtung üblicherweise nicht erhöhen. Die herkömmliche Bremseinrichtung kann besonders aufwendig sein und dabei beispielsweise einen besonders hohen Bauraum benötigen sowie besonders hohe Kosten aufweisen.

Demgegenüber weist die erfindungsgemäße Bremseinrichtung den Retarder auf, wodurch die erfindungsgemäße Bremseinrichtung nicht die Nachteile der elektromotorischen Bremse aufweist. Dadurch, dass die erfindungsgemäße Bremseinrichtung die Koppeleinrichtung aufweist, kann ein separat von der Koppeleinrichtung beziehungsweise von der Ventileinrichtung ausgebildetes Verstellelement zum Öffnen beziehungsweise zum Schließen des Kupplungselements entfallen. Somit kann das Zuführen des Fluids zu dem Retarder und die Kupplungsbetätigung beziehungsweise eine jeweilige Kupplungsstellung mittels der genau einen Ventileinrichtung realisiert werden. Zudem kann eine Verschiebungseinrichtung zur, insbesondere axialen, Rotorverschiebung des Rotors entfallen. Dadurch können Kosten und Bauraum der Bremseinrichtung beziehungsweise einer Retarderbaugruppe des Retarders besonders gering gehalten werden. Zudem kann ein besonders hoher Grad an Systemintegration erzielt werden. Darüber hinaus kann die Bremseinrichtung beziehungsweise der Retarder mit besonders wenig Aufwand dargestellt beziehungsweise hergestellt werden, da beispielsweise das Verstellelement beziehungsweise die Rotorverschiebung entfallen kann.

Die erfindungsgemäße Bremseinrichtung ist besonders dafür geeignet, in einem batterieelektrischen Fahrzeug oder in einem Brennstoffzellenfahrzeug oder in einem konventionellen Fahrzeug, welches beispielsweise die Verbrennungskraftmaschine umfasst, eingesetzt zu werden. Darüber hinaus umfasst die Bremseinrichtung vorzugsweise separat und einfach tauschbare Komponenten beziehungsweise Baugruppen, beispielsweise das Pumpenelement, die Ventileinrichtung oder das Hydrauliksystem. Dadurch können beispielsweise Wartungskosten und/oder Reparaturkosten der Bremseinrichtung beziehungsweise des Kraftfahrzeugs besonders gering gehalten werden. Zudem kann eine Abdichtung zwischen der Antriebswelle und dem Retarder, insbesondere dem Rotor entfallen. Ferner kann eine Entleervorrichtung entfallen.

In weiterer Ausgestaltung der Erfindung weist die Ventileinrichtung einen zwischen wenigstens zwei Positionen bewegbaren Ventilschieber auf, welcher in der ersten Ventilstellung in einer ersten der Position angeordnet ist und in der zweiten Ventilstellung in der zweiten Position angeordnet ist. Mit anderen Worten ausgedrückt weist die Ventileinrichtung beziehungsweise das Verbindungsmittel den insbesondere als Schieber bezeichneten Ventilschieber auf, welcher zwischen den wenigstens zwei Positionen translatorisch relativ zu dem Gehäuseelement verschiebbar ist, wobei sich der Ventilschieber in der ersten Ventilstellung der Ventileinrichtung in der ersten Position befindet und in der zweiten Ventilstellung der Ventileinrichtung in der zweiten Position befindet. Der Ventilschieber kann beispielsweise als Schaltkolben beziehungsweise als Steuerkolben ausgebildet sein. Die Koppeleinrichtung ist als mechanisch mit dem Ventilschieber gekoppelter Aktuator ausgebildet, welcher zwischen wenigstens zwei Aktuatorpositionen bewegbar ist, wobei der Aktuator durch Bewegen des Ventilschiebers in die erste Position in eine erste der Aktuatorpositionen bewegbar ist, wodurch der Rotor und die Abtriebswelle über das Kupplungselement gekoppelt sind, und durch das Bewegen des Ventilschiebers in die zweite Position in die zweite Aktuatorposition bewegbar ist, wodurch der Rotor und die Abtriebswelle voneinander entkoppelt sind. Mit anderen Worten ausgedrückt ist der Aktuator derart mechanisch mit dem Ventilschieber gekoppelt, sodass der Aktuator infolge des Bewegens des Ventilschiebers in die erste Position in die erste Aktuatorposition bewegbar ist beziehungsweise bewegt wird und der Aktuator infolge des Bewegens des Ventilschiebers in die zweite Position in die zweite Aktuatorposition bewegbar ist beziehungsweise bewegt wird. Der Aktuator ist derart mechanisch mit dem Kupplungselement gekoppelt, sodass der Rotor und die Antriebswelle in der ersten Aktuatorposition über das Kupplungselement miteinander gekoppelt sind und in der zweiten Aktuatorposition voneinander entkoppelt sind. Dadurch kann das Kupplungselement durch die Bewegung der Ventileinrichtung zwischen den Ventilstellungen beziehungsweise in die Ventilstellungen besonders vorteilhaft über die Koppeleinrichtung betätigt werden. Der Aktuator ist vorzugsweise als Schaltgabel, beispielsweise als Gestänge, ausgebildet.

In weiter Ausgestaltung weist die Bremseinrichtung wenigstens einen in dem Fluidpfad angeordneten und von dem Fluid durchströmbaren Kühler auf, mittels welchem Wärme von dem Fluid abführbar ist und/oder einen fluidisch mit dem Fluidpfad verbindbaren beziehungsweise verbundenen Hydrauliksumpf auf. Darunter kann insbesondere Folgendes verstanden werden: Der Fluidpfad umfasst den Kühler, welcher von dem den Fluidpfad durchströmenden Fluid durchströmbar ist, wobei infolge des Durchströmens Wärme des den Kühler durchströmenden Fluids mittels des Kühlers von dem Fluid abführbar ist, wodurch das Fluid mittels des Kühlers gekühlt werden kann. Dadurch kann eine Temperatur des Fluids besonders gering gehalten werden. Alternativ oder zusätzlich umfasst die Bremseinrichtung den insbesondere als Ölsumpf bezeichneten Hydrauliksumpf, welcher wenigstens einen Aufnahmeraum umfasst, in welchem das Fluid aufnehmbar ist, wobei der Hydrauliksumpf fluidisch mit dem Fluidpfad verbindbar beziehungsweise verbunden ist, wodurch das in dem Hydrauliksumpf aufgenommene Fluid zumindest teilweise aus dem Hydrauliksumpf abführbar und in den Fluidpfad einleitbar ist und/oder das den Fluidpfad durchströmende Fluid zumindest teilweise aus dem Fluidpfad abführbar und in den Hydrauliksumpf einleitbar ist. Mittels des Hydrauliksumpfs kann das Fluid besonders vorteilhaft gespeichert werden, wobei der Fluidpfad beispielsweise über den Hydrauliksumpf besonders vorteilhaft mit dem Fluid versorgt werden kann.

Vorzugsweise ist der Kühler als Wärmetauscher ausgebildet. Der Wärmetauscher kann beispielsweise als Rotationswärmetauscher ausgebildet sein, welcher insbesondere als Rotatory Heat Exchanger (RHE) bezeichnet werden kann. Mit anderen Worten ausgedrückt weist der Wärmetauscher vorzugsweise einen RHE-Rahmen auf.

Vorzugsweise ist es vorgesehen, dass das Fluid als Getriebeöl des Getriebes verwendbar ist beziehungsweise verwendet wird. Darunter kann insbesondere verstanden werden, dass der Hydrauliksumpf als gemeinsamer Hydrauliksumpf für die Bremseinrichtung und für das Getriebe ausgebildet ist, das heißt die Bremseinrichtung und das Getriebe nutzen einen gemeinsamen Fluidhaushalt beziehungsweise Ölhaushalt.

In einer weiteren Ausführungsform ist es vorgesehen, dass der Kühler in einer separat von der ersten und der zweiten Leitungsstrecke ausgebildeten und von dem Fluid durchströmbaren, dritten Leitungsstrecke des Fluidpfads angeordnet ist, wobei die dritte Leitungsstrecke über eine Verbindungsstelle mit der ersten Leitungsstrecke fluidisch verbunden ist, sodass das die erste Leitungsstrecke durchströmende Fluid zumindest teilweise unter Umgehung des Kühlers zu dem Ventileingang förderbar ist. Mit anderen Worten ausgedrückt weist die erste Leitungsstrecke die Verbindungsstelle auf, mittels welcher der Pumpenausgang mit dem Kühler fluidisch verbunden ist, wobei mittels der ersten Leitungsstrecke der Pumpenausgang unter Umgehung des Kühlers, des Retarders und des Hydrauliksumpfs mit dem Ventileingang fluidisch verbunden ist. Dadurch kann das die dritte Leitungsstrecke durchströmende Fluid besonders vorteilhaft mittels des Kühlers gekühlt werden, wodurch die Temperatur des Fluids besonders gering gehalten werden kann. Das den Kühler durchströmende Fluid kann über die Verbindungsstelle aus der dritten Leitungsstrecke entnommen werden, in die erste Leitungsstrecke eingeleitete werden und dort in einer der ersten Strömungsrichtung der ersten Leitungsstrecke entgegengesetzt, zweite Strömungsrichtung der ersten Leitungsstrecke über den Pumpenausgang zu dem Pumpenelement geführt werden beziehungsweise in das Pumpenelement eingeleitet werden.

In weiterer Ausgestaltung ist die dritte Leitungsstrecke fluidisch mit einem Retarderausgang des Retarders verbunden, wodurch das Fluid über den Retarderausgang aus dem Retarder abführbar und dem Kühler zuführbar ist. Mit anderen Worten ausgedrückt ist der Kühler in Strömungsrichtung des über den Retarderausgang aus dem Retarder abgeführten und in die dritte Leitungsstrecke eingeleiteten Fluids stromab des Retarderausgangs und stromauf der Verbindungsstelle angeordnet, wodurch das aus dem Retarder abgeführte Fluid mittels des Kühlers kühlbar ist. In der dritten Leitungsstrecke ist eine Verzweigungsstelle angeordnet, über welcher der Kühler unter Umgehung des Pumpenelements, des Retarders und der Ventileinrichtung fluidisch mit dem Hydrauliksumpf verbunden ist beziehungsweise verbindbar ist. Mit anderen Worten ausgedrückt weist die dritte Leitungsstrecke die Verzweigungsstelle auf, mittels welcher zumindest ein Teil des in dem Hydrauliksumpf aufgenommen Fluids aus dem Hydrauliksumpf abführbar und in die dritte Leitungsstrecke einleitbar ist und über die dritte Leitungsstrecke unmittelbar dem Kühler zuführbar ist. Wieder mit anderen Worten ausgedrückt ist die Verzweigungsstelle in Strömungsrichtung des von dem Retarderausgang zu dem Kühler strömenden Fluids in der dritten Leitungsstrecke zwischen dem Retarderausgang und dem Kühler angeordnet, wobei die Verbindungsstelle fluidisch mit dem Hydrauliksumpf verbindbar beziehungsweise verbunden ist. Das Fluid kann aus dem Hydrauliksumpf entnommen und über die Verzweigungsstelle in die dritte Leitungsstrecke eingeleitet werden und durch den Kühler hindurchgeführt werden, wodurch das Fluid, insbesondere das Getriebeöl, besonders vorteilhaft gekühlt werden kann, wodurch die Temperatur des Fluids, insbesondere des Getriebeöls, besonders gering gehalten werden kann.

Die Kühlung des Fluids kann sowohl beim Bremsen erfolgen, indem das Fluid aus dem Retarderausgang über die dritte Leitungsstrecke durch den Kühler geführt wird, als auch bei abgeschaltetem Retarder beziehungsweise abgekoppeltem Rotor erfolgen, indem das Fluid aus dem Hydrauliksumpf entnommen wird, über die dritte Verzweigungsstelle in die dritte leitungsstrecke eingeleitete wird und durch den Kühler geführt wird.

In einer weiteren Ausführungsform ist es vorgesehen, dass die erste Leitungsstrecke eine Entnahmestelle aufweist, über welche das Pumpenelement fluidisch mit einem Steueranschluss der Ventileinrichtung verbunden ist beziehungsweise verbindbar ist, wodurch der Steueranschluss mittels des Pumpenelements von dem Fluid beaufschlagbar ist, wodurch die Ventileinrichtung von der zweiten Ventilstellung in die erste Ventilstellung bewegbar ist. Mit anderen Worten ausgedrückt ist der Pumpenausgang über die Entnahmestelle unmittelbar oder unter Umgehung des Kühlers und unter Umgehung des Retarders mit dem Steueranschluss der Ventileinrichtung fluidisch verbunden. Wieder mit anderen Worten ausgedrückt ist zumindest ein Teil des mittels des Pumpenelements durch die erste Leitungsstrecke hindurch geförderten Fluids an der Entnahmestelle aus der ersten Leitungsstrecke entnehmbar und dem Steueranschluss zuführbar, wodurch die Ventileinrichtung, insbesondere der Ventilschieber, über den Steueranschluss von dem Fluid beaufschlagbar ist, wobei infolge der Beaufschlagung die Ventileinrichtung von der zweiten Stellung in die erste Stellung bewegbar ist beziehungsweise der Ventilschieber von der zweiten Position in die erste Position bewegbar ist. Dadurch kann mittels des Pumpenelements durch das Einstellen eines Fluiddrucks des Fluids die Ventileinrichtung betätigt werden und dadurch das Kupplungselement betätigt werden. Dadurch kann das Betätigen beziehungsweise das Schließen der Kupplungseinrichtung mittels der, insbesondere elektrischen, Ölpumpe durchgeführt werden, wodurch keine zusätzlich zu der Ölpumpe vorgesehene Ansteuerung für das Kupplungselement benötigt wird. Somit ist die Ventileinrichtung vorzugsweise ein hydraulisches Schaltventil. Mit anderen Worten ausgedrückt ist eine hydraulische Umschaltung der Ventileinrichtung mit einer Kupplungsbetätigung gekoppelt. Vorzugsweise ist die Entnahmestelle in Strömungsrichtung des von dem Pumpenelement zu dem Ventileingang strömenden Fluids stromab der Verzweigungsstelle angeordnet.

In einer weiteren Ausführungsform umfasst der Fluidpfad eine separat von den Leitungsstrecken ausgebildete und von dem Fluid durchströmbare vierte Leitungsstrecke, über welche das Pumpenelement und die Ventileinrichtung unter Umgehung der ersten Leitungsstrecke, des Retarders, des Ventileingangs, des Ventilausgangs und des Kühlers fluidisch verbunden sind. Mit anderen Worten ausgedrückt weist das Pumpenelement einen von dem Fluid durchströmbaren, von dem Pumpenausgang beabstandeten, insbesondere separat von dem Pumpenausgang ausgebildeten, Pumpeingang auf, welcher über die vierte Leitungsstrecke unter Umgehung des Pumpenausgangs, der ersten Leitungsstrecke, des Retarders, des Ventileingangs und des Ventilausgangs und des Kühlers mit der Ventileinrichtung fluidisch verbunden beziehungsweise verbindbar ist. Über den Pumpeneingang kann das die vierte Leitungsstrecke durchströmende Fluid dem Pumpenelement zugeführt werden und somit in das Pumpenelement eingeleitete werden. Dabei durchströmt das Fluid die vierte Leitungsstrecke in einer ersten Strömungsrichtung der vierten Leitungsstrecke.

Vorzugsweise ist es vorgesehen, dass die Ventileinrichtung wenigstens einen von dem Fluid durchströmbaren, von dem Ventileingang beabstandeten und fluidisch mit der vierten Leitungsstrecke verbundenen beziehungsweise verbindbaren, zweiten Ventileingang und wenigstens einen von dem Fluid durchströmbaren, von dem Ventilausgang beabstandeten und fluidisch mit dem Hydrauliksumpf verbundenen beziehungsweise verbindbaren, zweiten Ventilausgang aufweist, wobei in der zweiten Ventilstellung das die vierte Leitungsstrecke in einer der ersten Strömungsrichtung der vierten Leitungsstrecke entgegensetzen, zweiten Strömungsrichtung der vierten Leitungsstrecke durchströmende Fluid über den zweiten Ventileingang, durch die Ventileinrichtung hindurch, über den zweiten Ventilausgang in den Hydrauliksumpf einleitbar ist. Mit anderen Worten ausgedrückt ist das Pumpenelement über die vierte Leitungsstrecke unter Umgehung der ersten Leitungsstrecke, des Retarders, des Ventileingangs, des Ventilausgangs und des Kühlers fluidisch mit dem zweiten Ventileingang verbunden, welcher separat von dem Ventileingang und dem Ventilausgang ausgebildet ist, wobei die Ventileinrichtung den separat von dem Ventileingang, dem Ventilausgang und dem zweiten Ventileingang ausgebildeten, zweiten Ventilausgang umfasst, welcher unter Umgehung des Retarders und des Kühlers mit dem Hydrauliksumpf fluidisch verbunden ist. In der zweiten Ventilstellung der zweite Ventileingang mit dem zweiten Ventilausgang fluidisch verbunden. Dadurch kann beispielsweise, insbesondere mittels des Pumpenelements, das Fluid aus dem Hydrauliksumpf entnommen werden, über die Verzweigungsstelle in die dritte Leitungsstrecke eingeleitet, mittels des Kühlers gekühlt werden und über die Verbindungsstelle in die erste Leitungsstrecke eingeleitet werden. Anschließend kann das die erste Leitungsstrecke durchströmende Fluid über den Pumpenausgang dem Pumpenelement zugeführt werden und über den Pumpeneingang aus dem Pumpenelement abgeführt werden und in die vierte Leitungsstrecke eingeleitet werden. Anschließend kann das die vierte Leitungsstrecke in der zweiten Strömungsrichtung der vierten Leitungsstrecke durchströmende Fluid über die Ventileinrichtung, insbesondere über den zweiten Ventileingang und den zweiten Ventilausgang, in den Hydrauliksumpf eingeleitet werden. Dadurch kann das mittels des Kühlers gekühlte Fluid in den Hydrauliksumpf rückgeführt werden.

Beispielsweise weist die Ventileinrichtung einen separat von dem Durchgangskanal ausgebildeten, von dem Durchgangskanal beabstandeten und von dem Fluid durchströmbaren zweiten Durchgangskanal auf, welcher mit dem zweiten Ventileingang und dem zweiten Ventilausgang verbindbar ist. Der zweite Durchgangskanal ist nicht, insbesondere nicht unmittelbar, mit dem Durchgangskanal verbunden. In der zweiten Ventilstellung ist der zweite Durchgangskanal zumindest teilweise freigegeben, wodurch das Fluid den zweiten Durchgangskanal durchströmen kann und somit von dem zweiten Ventileingang zu dem zweiten Ventilausgang geführt werden kann. In der ersten Ventilstellung ist der zweite Durchgangskanal versperrt, wodurch der zweite Ventileingang und der zweite Ventilausgang nicht fluidisch miteinander verbunden sind, sodass das Führen des Fluids von dem zweiten Ventileingang zu dem zweiten Ventilausgang unterbleibt.

In einer weiteren Ausführungsform ist es vorgesehen, dass die Bremseinrichtung eine in der vierten Leitungsstrecke angeordnete, zweite Verbindungsstelle aufweist, über welche das die vierte Leitungsstrecke durchströmende Fluid unter Umgehung des Retarders, der Ventileinrichtung und des Kühlers mit dem Hydrauliksumpf fluidisch verbunden beziehungsweise verbindbar ist. Mit anderen Worten ausgedrückt weist die vierte Leitungsstrecke die zweite Verbindungsstelle auf, über welche der Hydrauliksumpf mit dem Pumpeneingang fluidisch verbunden beziehungsweise verbindbar ist. Dadurch kann das Fluid mittels des Pumpenelements angesaugt und somit aus dem Hydrauliksumpf entnommen werden und über die vierte Leitungsstrecke, das Pumpenelement, insbesondere den zweiten Pumpeneingang und den Pumpenausgang, über das erste Leitungselement, die Ventileinrichtung, insbesondere den Ventileingang und den Ventilausgang, und das zweite Leitungselement dem Retarder über den Retardereingang zugeführt werden. Dadurch kann der Rotor mittels des dem Retarder zugeführten Fluids abgebremst werden.

In einer weiteren Ausführungsform ist es vorgesehen, dass die Ventileinrichtung wenigstens einen von dem Steueranschluss beabstandeten und fluidisch mit der vierten Leitungsstrecke verbundenen, zweiten Steueranschluss aufweist, welcher mittels des Pumpenelements über die vierte Leitungsstrecke von dem Fluid beaufschlagbar ist, wodurch die Ventileinrichtung von der ersten Stellung in die zweite Stellung bewegbar ist. Mit anderen Worten ausgedrückt weist die vierte Leitungsstrecke eine separat von der zweiten Verbindungsstelle ausgebildete, dritte Verbindungsstelle auf, mittels welcher der Pumpeneingang des Pumpenelements unter Umgehung der Ventilvorrichtung und unter Umgehung des Retarders und unter Umgehung des Kühlers mit dem zweiten Steueranschluss der Ventilvorrichtung verbunden beziehungsweise verbindbar ist. Wieder mit anderen Worten ausgedrückt kann über die dritte Verbindungsstelle zumindest ein Teil des die vierte Leitungsstrecke in der zweiten Strömungsrichtung der vierten Leitungsstrecke durchströmenden Fluids aus der vierten Leitungsstrecke entnommen werden und dem zweiten Steueranschluss zugeführt werden, wodurch dieser mittels des Fluids beaufschlagt wird, wobei infolge der Beaufschlagung die Ventileinrichtung von der ersten Stellung in die zweite Stellung bewegbar ist beziehungsweise bewegt wird. Dadurch kann mittels des Pumpenelements an dem zweiten Steueranschluss ein Fluiddruck des Fluids bereitgestellt werden, infolgedessen die Ventileinrichtung von der ersten Stellung in die zweite Stellung bewegbar ist. Somit kann die Betätigung des Kupplungselements mittels des Pumpenelements durchgeführt werden, wodurch keine zusätzlich zu dem Pumpenelement vorgesehene Ansteuerung für die Betätigung des Kupplungselements erforderlich ist. Mit anderen Worten ausgedrückt ist eine hydraulische Umschaltung der Ventileinrichtung mit einer Kupplungsbetätigung gekoppelt.

Vorzugsweise ist eine elektronische Recheneinrichtung vorgesehen, mittels welcher die Bremseinrichtung über das Pumpenelement aktiviert und/oder geregelt beziehungsweise gesteuert und/oder überwacht wird.

In weiterer Ausgestaltung ist in der zweiten Leitungsstrecke ein von dem Fluid durchströmbares Rückschlagventil zwischen dem Retardereingang und dem Ventilausgang angeordnet. Vorzugsweise ist das erste Rückschlagventil dazu ausgebildet, eine Strömung des Fluids von dem Ventilausgang durch das erste Rückschlagventil hindurch zu dem Retardereingang zuzulassen und eine Strömung des Fluids von dem Retardereingang zu dem Ventilausgang zu unterbinden.

In weiterer Ausgestaltung ist in der zweiten Leitungsstrecke ein von dem Fluid durchströmbares, zweites Rückschlagventil zwischen dem Retarderausgang und dem Kühler, insbesondere der Verzweigungsstelle, angeordnet. Vorzugsweise ist das zweite Rückschlagventil dazu ausgebildet, eine Strömung von dem Retarderausgang durch das zweite Rückschlagventil hindurch zu dem Kühler, insbesondere der Verzweigungsstelle, zuzulassen und eine entgegengesetzte Strömung des Fluids von dem Kühler, insbesondere der Verzweigungsstelle, zu dem Retarderausgang zu unterbinden.

In weiterer Ausgestaltung ist in der dritten Leitungsstrecke zwischen dem Hydrauliksumpf und der Verzweigungsstelle ein von dem Fluid durchströmbares, drittes Rückschlagventil angeordnet. Vorzugsweise ist das dritte Rückschlagventil dazu ausgebildet, eine Strömung des Fluids von dem Hydrauliksumpf durch das dritte Rückschlagventil hindurch zu der Verzweigungsstelle zuzulassen und eine entgegengesetzte Strömung des Fluids von der Verzweigungsstelle zu dem Hydrauliksumpf zu unterbinden.

In weiterer Ausgestaltung ist in der vierten Leitungsstrecke zwischen dem Pumpenelement, insbesondere der zweiten Verbindungsstelle, und der Ventileinrichtung, insbesondere der dritten Verbindungsstelle, ein von dem Fluid durchströmbares, viertes Rückschlagventil angeordnet. Vorzugsweise ist das vierte Rückschlagventil dazu ausgebildet, eine Strömung des Fluids von dem Pumpenelement, insbesondere der zweiten Verbindungsstelle, durch das vierte Rückschlagventil hindurch zu der Ventileinrichtung, insbesondere der dritten Verbindungsstelle, zuzulassen und eine entgegengesetzte Strömung des Fluids von der Ventileinrichtung, insbesondere der dritten Verbindungsstelle, zu dem Pumpenelement, insbesondere der zweiten Verbindungsstelle, zu unterbinden.

In weiterer Ausgestaltung ist in der vierten Leitungsstrecke zwischen dem Hydrauliksumpf und der zweiten Verbindungsstelle ein von dem Fluid durchströmbares, fünftes Rückschlagventil angeordnet. Vorzugsweise ist das fünfte Rückschlagventil dazu ausgebildet, eine Strömung des Fluids von dem Hydrauliksumpf zu der zweiten Verbindungsstelle zuzulassen und eine entgegengesetzte Strömung des Fluids von der zweiten Verbindungsstelle zu dem Hydrauliksumpf zu unterbinden.

Beispielsweise kann wenigstens eines der Rückschlagventile ein Federelement aufweisen, insbesondere eine Anlegefeder. Dadurch kann beispielsweise das Zulassen der jeweiligen Strömung des Fluids ab einem bestimmten Fluiddruck des Fluids erfolgen, wobei der hierfür erforderliche minimale Fluiddruck von dem Federelement, insbesondere einer Steifigkeit des Federelements, abhängt.

Bei einem insbesondere als Synchronisation bezeichneten Betriebszustand der Bremseinrichtung befindet sich die Ventileinrichtung zu Beginn in der zweiten Ventilstellung. Mittels des Pumpenelements wird das Fluid durch die erste Leitungsstrecke hindurch gefördert, wodurch ein Druckaufbau des Fluids in der ersten Leitungsstrecke erzielt werden kann. Dadurch wird der Steueranschluss von dem Fluid beziehungsweise dem Druck des Fluids beaufschlagt, wodurch insbesondere dadurch, dass der Druck des Fluids bei dem Steueranschluss größer ist als bei dem zweiten Steueranschluss, die Ventileinrichtung von der zweiten Ventilstellung in Richtung der ersten Ventilstellung bewegt wird. Dadurch kann der Ventilschieber von der zweiten Position in Richtung der ersten Position bewegt und der Aktuator kann von der zweiten Aktuatorposition in Richtung der ersten Aktuatorposition bewegt werden. Dadurch kann mittels des Kupplungselements beziehungsweise mittels einer Synchroneinrichtung eine Synchronisierung, insbesondere eine Sperrsynchronisation, der Drehzahlen des Rotors und der Antriebswelle erfolgen. Wenn sich die Ventileinrichtung infolge der weiteren Beaufschlagung des Steueranschlusses mit dem Fluid beziehungsweise dem Druck in die erste Ventilstellung bewegt hat, so sind die Drehzahlen des Rotors und der Antriebswelle synchron. Dies kann insbesondere als Durchschaltung bei Gleichlauf bezeichnet werden. Dann befindet sich der Ventilschieber in der ersten Position und der Aktuator in der ersten Aktuatorposition.

Neben aktiver Steuerung beziehungsweise Regelung der Bremseinrichtung, insbesondere des Retarders, durch das Pumpenelement wird eine Aktivierung der Synchronisation ebenfalls durch das gleiche Pumpenelement durchgeführt. Damit wird keine gesonderte Ansteuerung für die Synchroneinrichtung benötigt.

Nach der Synchronisation kann die Bremseinrichtung in einen insbesondere als Bereitschaftsmodus bezeichneten Betriebsmodus oder in einen insbesondere als Bremsmodus bezeichneten Betriebsmodus übergehen. Bei dem Bremsmodus erfolgt mittels des Pumpenelements ein Druckaufbau beziehungsweise eine Druckmodulation des Fluids in der ersten Leitungsstrecke, wobei der Druckaufbau beispielsweise größer sein kann als der Druckaufbau bei der Synchronisation. Dadurch, dass sich die Ventileinrichtung in der ersten Ventilstellung befindet, kann das Fluid mittels des Pumpenelements über die erste Leitungsstrecke durch die Ventileinrichtung hindurch, insbesondere über den Ventileingang und den Ventilausgang, über den Retardereingang in den Retarder eingeleitet werden, wodurch ein Druck des Fluids in dem Retarder besonders erhöht werden kann. Dadurch kann mittels der Bremseinrichtung, insbesondere des Retarders, ein Bremsmoment zum Abbremsen der Antriebswelle aufgebaut werden. Dieses Bremsmoment kann beispielsweise bei einer Überschreitung eines Temperaturschwellenwerts einer Temperatur des Fluids begrenzt werden. Hierfür kann in dem Fluidpfad, vorzugsweise in der dritten Leitungsstrecke, ein Temperatursensor zur Erfassung der Temperatur des Fluids vorgesehen sein. Wenn die mittels des Temperatursensors erfasste Temperatur höher ist als der Temperaturschwellenwert, kann die Bremsmomentenbegrenzung erfolgen.

Bei dem Bereitschaftsmodus ist beziehungsweise wird der Druck des Fluids in der ersten Leitungsstrecke mittels des Pumpenelements gegenüber dem Bremsmodus reduziert. Somit findet, bezogen auf den Bremsmodus, ein Druckabbau des Drucks des Fluids statt. Dabei ist es vorzugsweise vorgesehen, dass mittels des Pumpenelements in der vierten Leitungsstrecke ein Druckaufbau des Fluids unterbleibt, wodurch der zweite Steueranschluss vorzugsweise nicht von dem Fluid beaufschlagt wird. Die Synchronisation der Drehzahlen des Rotors und der Antriebswelle bleibt weiterhin aktiv. Die Ventileinrichtung verbleibt in der ersten Ventilstellung, der Ventilschieber verbleibt in der ersten Position und der Aktuator verbleibt in der ersten Aktuatorposition.

Ein weiterer Betriebsmodus kann insbesondere als Abschaltung bezeichnet werden. Die Abschaltung kann beispielsweise auf den Bereitschaftsmodus folgen. Bei der Abschaltung wird mittels des Pumpenelements das Fluid in die vierte Leitungsstrecke gefördert, wodurch in der vierten Leitungsstrecke ein Druckaufbau des Fluids realisiert werden kann. Dadurch wird der zweite Steueranschluss von dem Fluid beziehungsweise dem Druck des Fluids beaufschlagt. Insbesondere dadurch, dass in der vierten Leitungsstrecke der Druckaufbau stattfindet, ist der Druck des Fluids in dem zweiten Steueranschluss größer als in dem ersten Steueranschluss. Dadurch wird die Ventileinrichtung von der ersten Ventilstellung in Richtung der zweiten Ventilstellung bewegt. Dabei kann die Ventileinrichtung von der ersten Ventilstellung in die zweite Ventilstellung bewegt werden oder die Ventileinrichtung kann von der ersten Ventilstellung in eine Zwischenstellung bewegt werden, welche sich zwischen der ersten und der zweiten Ventilstellung befindet. Vorzugsweise befindet sich das Pumpenelement in der ersten Leitungsstrecke in einem Saugbetrieb, das heißt das die erste Leitungsstrecke durchströmende Fluid wird von dem Pumpenelement angesaugt, durch das Pumpenelement hindurch gefördert und somit in die vierte Leitungsstrecke eingeleitet. Dadurch kann der Druck des Fluids in der ersten Leitungsstrecke gegenüber dem Bremsbetrieb besonders reduziert werden und in der vierten Leitungsstrecke besonders erhöht werden, wodurch eine Druckdifferenz zwischen dem Druck des Fluids bei dem zweiten Steueranschluss und dem Steueranschluss besonders erhöht werden kann. Dadurch, dass die Ventileinrichtung in die zweite Ventilstellung bewegt wird, wird das Kupplungselement geöffnet, wodurch die Synchronisation der Drehzahlen des Rotors und der Antriebswelle deaktiviert wird.

Ein weiterer Betriebsmodus kann insbesondere als Kühlmodus bezeichnet werden. Dabei wird mittels des Pumpenelements das Fluid aus dem Hydrauliksumpf angesaugt, dem in der dritten Leitungsstrecke angeordneten Kühler zugeführt und anschließend über die vierte Leitungsstrecke, den zweiten Ventileingang und den zweiten Ventilausgang in den Hydrauliksumpf eingeleitet. Dabei kann in Strömungsrichtung des zu dem Kühler geführten Fluids stromauf des Kühlers, insbesondere in der vierten Leitungsstrecke, ein insbesondere als Nebenstromfilter bezeichnetes Filterelement angeordnet sein. Das Filterelement ist von dem Fluid durchströmbar, wodurch das den Filter durchströmende Fluid mittels des Filterelements gefiltert und somit gereinigt werden kann.

Vorzugsweise wird das Pumpenelement in dem Bremsmodus in einem insbesondere als Vorwärtsbetrieb bezeichneten Vorwärtslauf betrieben und in dem Kühlmodus in einem dem Vorwärtslauf entgegengesetzten und insbesondere als Rückwärtsbetrieb bezeichneten Rückwärtslauf betrieben.

In einer weiteren Ausführungsform weist die Bremseinrichtung eine Abschalteinrichtung auf. Die Abschalteinrichtung ist dazu ausgebildet, den Druck des Fluids in der vierten Leitungsstrecke, insbesondere besonders schnell, besonders zu erhöhen, wodurch der zweite Steueranschluss, mit dem Druck des Fluids beaufschlagt werden kann, wodurch die Ventileinrichtung, insbesondere besonders schnell, von der ersten Ventilstellung in die zweite Ventilstellung bewegt wird.

In weiterer Ausgestaltung ist die die Abschalteinrichtung als hydraulische Abschalteinrichtung ausgebildet. Dabei weist die Abschalteinrichtung einen von dem Fluid durchströmbaren Eingang und einen von dem Fluid durchströmbaren Ausgang auf, welcher fluidisch mit dem zweiten Steueranschluss verbunden beziehungsweise verbindbar ist. Die hydraulische Abschalteinrichtung ist zwischen wenigstens zwei Stellungen bewegbar, wobei in einer ersten der Stellungen der Eingang und der Ausgang fluidisch verbunden sind, wodurch das Fluid von dem Eingang durch die Abschalteinrichtung hindurch zu dem Ausgang strömen kann, und in der zweiten Stellung ist der Eingang nicht fluidisch mit dem Ausgang verbunden, wodurch das Durchströmen der Abschalteinrichtung mit dem Fluid unterbleibt. Die Abschalteinrichtung ist als Sicherheitsabschaltung vorgesehen, wodurch eine Sicherheit der Bremseinrichtung gegenüber einer Beschädigung beziehungsweise Zerstörung der Bremseinrichtung besonders erhöht werden kann.

Beispielsweise kann der Eingang fluidisch, insbesondere unmittelbar, mit dem ersten Retarderausgang oder mit dem zweiten Retarderausgang verbunden sein. Dabei kann bei einem insbesondere als Schnellabschaltung oder Sicherheitsabschaltung bezeichneten Betriebsmodus, welcher beispielsweise auf den Bremsmodus folgen kann, die hydraulische Abschalteinrichtung von der zweiten Stellung in die erste Stellung bewegt werden. Dadurch kann das aus dem Retarder über den ersten Retarderausgang oder den zweiten Retarderausgang abgeführte Fluid durch die Abschalteinrichtung hindurch, insbesondere über den Eingang und den Ausgang, geführt werden, in die vierte Leitungsstrecke eingeleitet werden und dem zweiten Steueranschluss zugeführt werden, wodurch der Druck in der vierten Leitungsstrecke, insbesondere in dem zweiten Steueranschluss, besonders erhöht werden kann. Insbesondere dadurch, dass der Druck an dem zweiten Steueranschluss dann größer ist als der Druck des Fluids an dem ersten Steueranschluss, kann die Ventileinrichtung von der ersten Ventilstellung in die zweite Ventilstellung bewegt werden. Dadurch wird das Kupplungselement geöffnet, was insbesondere als Trennung des Rotors und der Antriebswelle bezeichnet werden kann. Optional kann es vorgesehen sein, dass mittels des Pumpenelements im Saugbetrieb der Druck des Fluids in der ersten Leitungsstrecke und damit an dem Steueranschluss besonders reduziert werden kann, wodurch die Druckdifferenz zwischen dem zweiten Steueranschluss und dem Steueranschluss besonders erhöht werden kann. Die Abschalteinrichtung kann insbesondere als mechanisch gekoppeltes Umschaltventil bezeichnet werden.

Alternativ kann die Abschalteinrichtung als pneumatische Abschalteinrichtung ausgebildet sein. Die pneumatische Abschalteinrichtung ist zwischen wenigstens zwei Stellungen bewegbar und weist einen von Luft durchströmbaren Eingang und einen von Luft durchströmbaren, von dem Eingang beabstandeten, Ausgang auf. Der Eingang ist fluidisch mit einem Druckluftreservoir verbunden, mittels welchem die pneumatische Abschalteinrichtung, insbesondere der Eingang, mit Druckluft versorgbar ist. Die pneumatische Abschalteinrichtung weist einen pneumatischen Zylinder auf, in welchem ein Kolbenelement translatorisch bewegbar aufgenommen ist. Das Kolbenelement kann dabei translatorisch relativ zu einer Zylinderwand des pneumatischen Zylinders zwischen einer ersten Kolbenstellung und einer zweiten Kolbenstellung bewegt werden. Der Zylinder weist eine von der Luft beziehungsweise der Druckluft durchströmbare Öffnung auf, welche fluidisch mit dem Ausgang verbunden beziehungsweise verbindbar ist. Das Kolbenelement ist mit der Ventileinrichtung, insbesondere dem Ventilschieber und/oder der Koppeleinrichtung, mechanisch verbunden beziehungsweise gekoppelt.

In einer ersten der Stellungen ist der Eingang fluidisch mit dem Ausgang verbunden, wodurch die Luft aus dem Reservoir über den Eingang und den Ausgang, durch die Öffnung hindurch in den Zylinder einleitbar ist, wodurch das Kolbenelement von der Druckluft beaufschlagt wird. In der zweiten der Stellungen ist der Eingang nicht fluidisch mit dem Ausgang verbunden, wodurch das Beaufschlagen des Kolbenelements mit der Druckluft unterbleibt. Durch das Beaufschlagen des Kolbenelements mit der Druckluft wird das Kolbenelement von der ersten Stellung in die zweite Stellung bewegt. Dadurch, dass das Kolbenelement und die Ventileinrichtung mechanisch gekoppelt sind, wird beim Bewegen des Kolbenelements in die zweite Kolbenstellung die Ventileinrichtung von der ersten Ventilstellung in die zweite Ventilstellung bewegt.

Die Schnellabschaltung kann schneller durchgeführt werden als die Abschaltung, worunter insbesondere verstanden werden kann, dass eine Zeitspanne, innerhalb welcher die Ventileinrichtung von der ersten Ventilstellung in die zweite Ventilstellung bewegt wird, bei der Schnellabschaltung geringer ist als bei der Abschaltung. Dadurch kann beispielsweise eine vorzeitige und somit ungewollte Befüllung des Retarders mit dem Fluid verhindert werden, wodurch beispielsweise eine Beschädigung oder eine Zerstörung der Bremseinrichtung, insbesondere des Kupplungselements oder der Koppeleinrichtung, verhindert werden kann. Dadurch kann eine Sicherheit der Bremseinrichtung besonders erhöht werden.

Alternativ kann beispielsweise bei dem batterieelektrischen Fahrzeug oder bei dem Brennstoffzellenfahrzeug auf die Abschalteinrichtung und somit die Sicherheitsabschaltung verzichtet werden, wenn die elektrische Maschine zum Antreiben des Kraftfahrzeugs das Bremsmoment bei einem aktiven Antiblockiersystem (ABS) besonders schnell und somit schnell genug kompensieren kann.

Vorzugsweise wird die Abschalteinrichtung elektrohydraulisch oder elektropneumatisch aktiviert. Darunter kann insbesondere verstanden werden, dass bei der als hydraulische Abschalteinrichtung ausgebildeten Abschalteinrichtung und bei der als pneumatische Abschalteinrichtung ausgebildeten Abschalteinrichtung die jeweilige Abschalteinrichtung mittels eines Elektromotors von der ersten Stellung in die zweite Stellung bewegt werden kann.

Vorzugsweise weist die Abschalteinrichtung wenigstens ein Federelement auf, mittels welchem die Abschalteinrichtung von der zweiten Stellung in die erste Stellung bewegt werden kann.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Teilschnittansicht einer erfindungsgemäßen Bremseinrichtung in einer ersten Ventilstellung; und
- Fig. 2: eine schematische Teilschnittansicht einer erfindungsgemäßen Bremseinrichtung in einer zweiten Ventilstellung; und
- Fig. 3: eine schematische Teilschnittansicht einer erfindungsgemäßen Bremseinrichtung in einer Zwischenstellung; und
- Fig. 4: eine schematische Teilschnittansicht einer erfindungsgemäßen Bremseinrichtung gemäß einer weiteren Ausführungsform.

In den Fig. sind gleiche oder funktionsgleiche Elemente mit gleichen Bezugszeichen versehen.

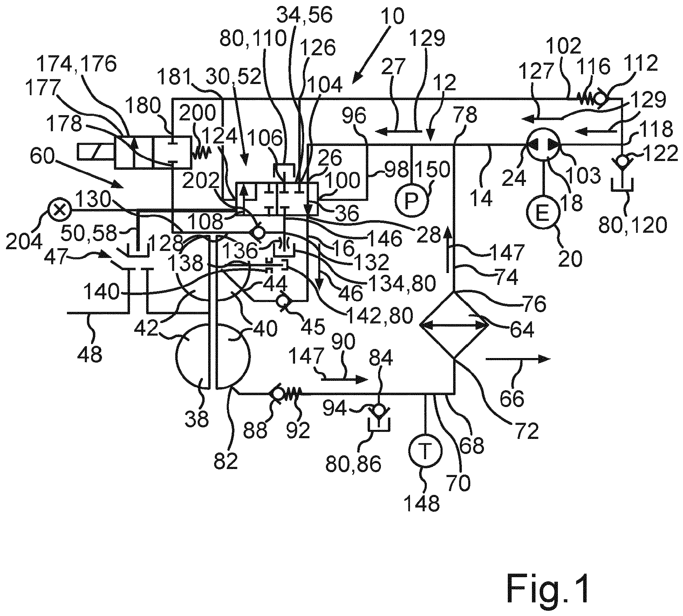

Fig. 1 zeigt in einer schematischen Teilschnittansicht eine Bremseinrichtung 10 für ein Kraftfahrzeug. Das Kraftfahrzeug ist vorzugsweise als Nutzfahrzeug ausgebildet.

Beispielsweise ist das Kraftfahrzeug als Kraftwagen, insbesondere als Personenkraftwagen, Nutzkraftwagen oder Lastkraftwagen oder als Personenbus ausgebildet.

Die Bremseinrichtung 10 umfasst einen von einem Fluid durchströmbaren Fluidpfad 12, welcher insbesondere als Hydrauliksystem bezeichnet werden kann. Der Fluidpfad 12 weist wenigstens zwei von dem Fluid durchströmbare Leitungsstrecken 14, 16 auf. In dem Fluidpfad 12 ist wenigstens ein Pumpenelement 18 zum Hindurchfördern des Fluids durch den Fluidpfad 12 angeordnet. Das Pumpenelement 18 ist vorzugsweise als elektrische Pumpe ausgebildet. Das als elektrische Pumpe ausgebildete Pumpenelement 18 kann von einem Elektromotor 20 angetrieben werden. Über einen Pumpenausgang 24 des Pumpenelements 18 ist das Pumpenelement 18 fluidisch mit einer ersten der Leitungsstrecken 14 verbunden. In dem Fluidpfad 12 ist wenigstens eine von dem Fluid durchströmbare, wenigstens einen Ventileingang 26 und einen Ventilausgang 28 aufweisende und zwischen wenigstens zwei Ventilstellungen 30, 32 bewegbare Ventileinrichtung 34 angeordnet. Die Ventileinrichtung 34 ist über den Ventileingang 26 fluidisch mit der ersten Leitungsstrecke 14 verbunden, wodurch der Ventileingang 26 fluidisch mit dem Pumpenelement 18, insbesondere dem Pumpenausgang 24, verbunden ist. Die Ventileinrichtung 34 weist einen von dem Fluid durchströmbaren Durchgangskanal 36 auf, welcher fluidisch mit dem Ventileingang 26 und dem Ventilausgang 28 verbindbar ist.

Die Bremseinrichtung 10 weist einen Retarder 38 auf, welcher einen Stator 40 und einen separat von dem Stator 40 ausgebildeten und um eine Drehachse relativ zu einem Gehäuseelement des Retarders 38 verdrehbaren Rotor 42 umfasst. Der Retarder 38 weist einen Retardereingang 44 auf, über welchen der Retarder 38 mittels der zweiten Leitungsstrecke 16 fluidisch über den Ventilausgang 28 mit der Ventileinrichtung 34 verbunden ist.

In einer ersten der Ventilstellungen 30 ist der Ventileingang 26 über den Durchgangskanal 36 fluidisch mit dem Ventilausgang 28 verbunden, wodurch das die erste Leitungsstrecke 14 durchströmende Fluid über den Ventileingang 26 durch die Ventileinrichtung 34 hindurch, über den Ventilausgang 28 und über die zweite Leitungsstrecke 16 dem Retardereingang 44 zuführbar ist. Dadurch kann das Fluid in den Retarder 38 eingeleitet werden. In der Fig. 1 befindet sich die Ventileinrichtung 34 in der ersten Ventilstellung 30.

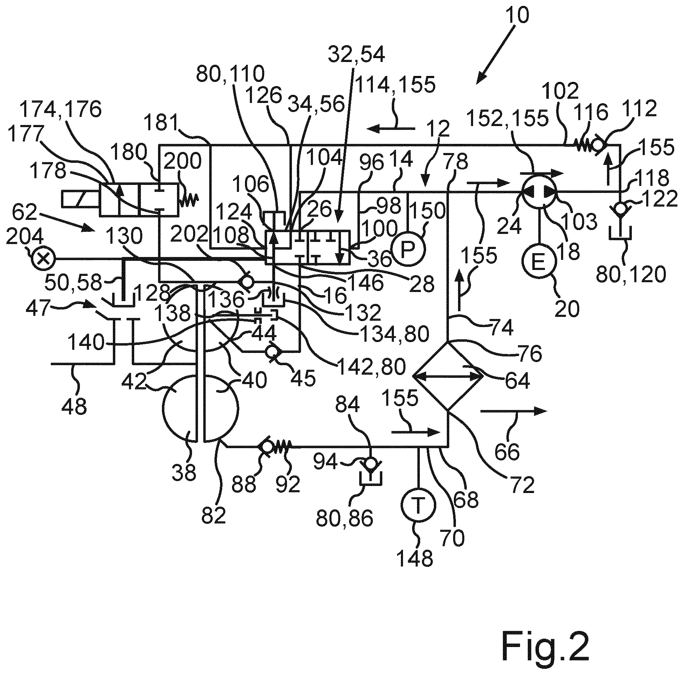

Fig. 2 zeigt in einer schematischen Teilschnittansicht die Bremseinrichtung 10, wobei sich die Ventileinrichtung 34 in der zweiten Ventilstellung 32 befindet. In der zweiten Ventilstellung 32 ist der Ventileingang 26 nicht fluidisch mit dem Ventilausgang 28 verbunden, wodurch das die erste Leitungsstrecke 14 durchströmende Fluid nicht über den Ventileingang 26 in den Durchgangskanal 28 gelangen kann und somit nicht über den Ventilausgang 28 in die zweite Leitungsstrecke 16 eingeleitet werden kann. Dadurch unterbleibt in der zweiten Ventilstellung 32 das Zuführen des Fluids von der ersten Leitungsstrecke 14 über die Ventileinrichtung 34 zu dem Retarder 38, insbesondere dem Retardereingang 44.

In der zweiten Leitungsstrecke 16 ist zwischen dem Ventilausgang 28 und dem Retardereingang 44 ein von dem Fluid durchströmbares erstes Rückschlagventil 45 angeordnet. Das Rückschlagventil 45 ist dazu ausgebildet, eine Strömung des Fluids in einer Strömungsrichtung 46 von dem Ventilausgang 28 durch das Rückschlagventil 45 hindurch zu dem Retardereingang 44 zuzulassen und eine der Strömungsrichtung 46 entgegengesetzte Strömung des Fluids von dem Retardereingang 44 zu dem Ventilausgang 28 zu unterbinden.

Um Bauraum und Kosten der Bremseinrichtung 10 besonders gering halten zu können, weist die Bremseinrichtung 10 wenigstens ein Kupplungselement 47 auf, über welches der Rotor 42 mit einer Antriebswelle 48 des Kraftfahrzeugs koppelbar und von der Antriebswelle 48 entkoppelbar ist. Zudem weist die Bremseinrichtung 10 eine Koppeleinrichtung 50 auf, mittels welcher der Rotor 42 und die Antriebswelle 48 durch das Bewegen der Ventileinrichtung 34 in die erste Ventilstellung 30 über das Kupplungselement 47 koppelbar sind und durch das Bewegen der Ventileinrichtung 34 in die zweite Ventilstellung 32 entkoppelbar sind. Wenn sich die Ventileinrichtung 34 in der ersten Ventilstellung 30 befindet, ist das Kupplungselement 47 geschlossen, wodurch die Antriebswelle 48 und der Rotor 42 mechanisch gekoppelt sind. Wenn sich die Ventileinrichtung 34 in der zweiten Ventilstellung 32 befindet, ist das Kupplungselement 47 geöffnet, wodurch die Antriebswelle 48 und der Rotor 42 entkoppelt sind.

In weiterer Ausgestaltung weist die Ventileinrichtung 34 einen zwischen wenigstens zwei Positionen 52, 54 bewegbaren Ventilschieber 56 auf. Der Ventilschieber 56 ist in der ersten Ventilstellung 30 in einer ersten der Positionen 52 angeordnet und in der zweiten Ventilstellung 32 in der zweiten der Positionen 54 angeordnet. Die Koppeleinrichtung 50 ist als mechanisch mit dem Ventilschieber 56 gekoppelter Aktuator 58 ausgebildet, welcher zwischen wenigstens zwei Aktuatorpositionen 60, 62 bewegbar ist. Der Aktuator 58 ist durch Bewegen des Ventilschiebers 56 in die erste Position 52 in eine erste der Aktuatorpositionen 60 bewegbar, wodurch der Rotor 42 und die Antriebswelle 48 über das Kupplungselement 47 gekoppelt sind. Durch das Bewegen des Ventilschiebers 56 in die zweite Position 54 ist der Aktuator 58 in die zweite der Aktuatorpositionen 62 bewegbar, wodurch der Rotor 42 und die Antriebswelle 48 entkoppelt sind.

In weiterer Ausgestaltung ist ein von dem Fluid durchströmbarer Kühler 64, mittels welchem Wärme 66 von dem Fluid abführbar ist, in einer von dem Fluid durchströmbaren und separat von der ersten und der zweiten Leitungsstrecke 14, 16 ausgebildeten, dritten Leitungsstrecke 68 angeordnet. Ein erster Streckenabschnitt 70 der dritten Leitungsstrecke 68 ist fluidisch mit einem Kühlereingang 72 des Kühlers 64 verbunden. Ein zweiter Streckenabschnitt 74 der dritten Leitungsstrecke 68 ist fluidisch mit einem Kühlerausgang 76 des Kühlers 64 verbunden. Die dritte Leitungsstrecke 68, insbesondere der zweite Streckenabschnitt 74, ist über eine Verbindungsstelle 78 mit der ersten Leitungsstrecke 14 fluidisch verbunden, sodass das die erste Leitungsstrecke 14 durchströmende Fluid zumindest teilweise unter Umgehung des Kühlers 64 zu dem Ventileingang 26 förderbar ist.

In weiterer Ausgestaltung weist die Bremseinrichtung 10 einen fluidisch mit dem Fluidpfad 12 verbundenen beziehungsweise verbindbaren Hydrauliksumpf 80 auf, in welchem das Fluid aufgenommen beziehungsweise gespeichert werden kann. Vorzugsweise handelt es sich bei dem Fluid um Öl, welches als Getriebeöl eines Getriebes des Kraftfahrzeugs vorgesehen ist, wodurch es sich bei dem Hydrauliksumpf 80 um einen gemeinsamen Sumpf für das Getriebe und die Bremseinrichtung 10, insbesondere den Retarder 38 beziehungsweise den Fluidpfad 12, handelt.

Die dritte Leitungsstrecke 68 ist fluidisch mit einem Retarderausgang 82 des Retarders 38 verbunden, wodurch das Fluid über den Retarderausgang 82 aus dem Retarder 38 abführbar, in die dritte Leitungsstrecke 68, insbesondere den ersten Streckenabschnitt 70, einleitbar ist und dem Kühler 64 zuführbar ist, wodurch das Fluid gekühlt werden kann. In der dritten Leitungsstrecke 68, insbesondere in dem ersten Streckenabschnitt 70, ist eine Verzweigungsstelle 84 angeordnet, über welche die dritte Leitungsstrecke 68, insbesondere der erste Streckenabschnitt 70, über einen ersten Sumpfzugang 86 mit dem Hydrauliksumpf 80 fluidisch verbunden ist.

In der dritten Leitungsstrecke 68, insbesondere in dem ersten Streckenabschnitt 70, ist zwischen dem Retarderausgang 82 und dem Kühler 64, insbesondere stromab der Verzweigungsstelle 84, ein von dem Fluid durchströmbares, zweites Rückschlagventil 88 angeordnet. Vorzugsweise ist das zweite Rückschlagventil 88 dazu ausgebildet, eine Strömung des Fluids in einer Strömungsrichtung 90 von dem Retarderausgang 82 zu dem Kühler 64, insbesondere zu der Verzweigungsstelle 84, zuzulassen und eine der Strömungsrichtung 90 entgegengesetzte Strömung des Fluids von der Verzweigungsstelle 84 beziehungsweise von dem Kühler 64 oder von dem ersten Sumpfzugang 86 zu unterbinden. Das zweite Rückschlagventil 88 weist ein Federelement 92 auf, wodurch das zweite Rückschlagventil 88 als federbelastetes Rückschlagventil ausgebildet ist. Zwischen dem ersten Sumpfzugang 86 und der Verzweigungsstelle 84 ist ein von dem Fluid durchströmbares, drittes Rückschlagventil 94 angeordnet. Das dritte Rückschlagventil 94 ist dazu ausgebildet, eine Strömung des Fluids aus dem Hydrauliksumpf 80 über den ersten Sumpfzugang 86 durch das dritte Rückschlagventil 94 hindurch zu der Verzweigungsstelle 84 zuzulassen und eine entgegengesetzte Strömung des Fluids von der Verzweigungsstelle 84 zu dem ersten Sumpfzugang 86 zu unterbinden.

In einer weiteren Ausführungsform weist die erste Leitungsstrecke 14 eine in Strömungsrichtung 27 des von dem Pumpenelement 18 zu dem Ventileingang 26 strömenden Fluids stromab der Verbindungsstelle 78 angeordnete Entnahmestelle 96 auf. Über die Entnahmestelle 96 ist die erste Leitungsstrecke 14 fluidisch mit einem von dem Fluid durchströmbaren ersten Leitungselement 98 verbunden. Das erste Leitungselement 98 ist einenends fluidisch mit der Entnahmestelle 96 verbunden und andernends mit einem Steueranschluss 100 der Ventileinrichtung 34 fluidisch verbunden. Dadurch ist das Pumpenelement 18, insbesondere der Pumpenausgang 24, über die Entnahmestelle 96 fluidisch mit dem Steueranschluss 100 der Ventileinrichtung 34 verbunden, wodurch der Steueranschluss 100 mittels des Pumpenelements 18 von dem Fluid beaufschlagbar ist, wodurch die Ventileinrichtung 34 von der zweiten Ventilstellung 32 in die erste Ventilstellung 30 bewegbar ist. Dadurch kann das geschlossene Kupplungselement 47 geöffnet werden.

In weiterer Ausgestaltung weist der Fluidpfad 12 eine separat von den Leitungsstrecken 14, 16, 68 ausgebildete und von dem Fluid durchströmbare, vierte Leitungsstrecke 102 auf, über welche das Pumpenelement 18 und die Ventileinrichtung 34 unter Umgehung der ersten Leitungsstrecke 14, des Retarders 38, des Ventileingangs 26, des Ventilausgangs 28 und des Kühlers 64 fluidisch verbunden sind. Das Pumpenelement 18 ist dabei über einen von dem Pumpenausgang 24 beabstandeten Pumpeneingang 103 über die vierte Leitungsstrecke 102 fluidisch mit der Ventileinrichtung 34 verbunden.

In einer weiteren Ausführungsform weist die Ventileinrichtung 34 einen von dem Ventileingang 26 beabstandeten und fluidisch mit der vierten Leitungsstrecke 102 verbundenen, zweiten Ventileingang 104 und wenigstens einen von dem Ventilausgang 28 beabstandeten zweiten Ventilausgang 106 auf. Das Pumpenelement 18 ist über die vierte Leitungsstrecke 102 unter Umgehung der ersten Leitungsstrecke 14, des Retarders 38, des Ventileingangs 26, des Ventilausgangs 28 und des Kühlers 64 fluidisch mit dem zweiten Ventileingang 104 verbunden. Die Ventileinrichtung 34 weist einen von dem Durchgangskanal 36 beabstandeten und von dem Fluid durchströmbaren, zweiten Durchgangskanal 108 auf, welcher fluidisch mit dem zweiten Ventileingang 104 und dem zweiten Ventilausgang 106 verbindbar ist. Der zweite Ventilausgang 106 ist über einen zweiten Sumpfzugang 110 fluidisch mit dem Hydrauliksumpf 80 verbunden. In der zweiten Ventilstellung 32 sind der zweite Ventileingang 104 und der zweite Ventilausgang 106 fluidisch verbunden, wodurch das die vierte Leitungsstrecke 102 durchströmende Fluid über den zweiten Ventileingang 104 in den zweiten Durchgangskanal 108 einleitbar ist und dadurch durch die Ventileinrichtung 34 hindurch über den zweiten Ventilausgang 106 über den zweiten Sumpfzugang 110 in den Hydrauliksumpf 80 einleitbar ist. In der ersten Ventilstellung 30 ist der zweite Ventileingang 104 nicht fluidisch mit dem zweiten Ventilausgang 106 verbunden, wodurch das Einleiten des die vierte Leitungsstrecke 102 durchströmenden Fluids über die Ventileinrichtung 34, insbesondere den zweiten Durchgangskanal 108, über den zweiten Sumpfzugang 110 in den Hydrauliksumpf 80 unterbleibt.

In der vierten Leitungsstrecke 102 ist zwischen dem Pumpenelement 18 und dem zweiten Ventileingang 104 ein von dem Fluid durchströmbares, viertes Rückschlagventil 112 angeordnet. Das vierte Rückschlagventil 112 ist dazu ausgebildet, eine Strömung des Fluids in einer Strömungsrichtung 114 von dem Pumpenelement 18, insbesondere dem Pumpeneingang 103, zu dem zweiten Ventileingang 104 zuzulassen und eine der Strömungsrichtung 114 entgegengesetzte Strömung des Fluids von dem zweiten Ventileingang 104 zu dem Pumpenelement 18, insbesondere dem Pumpeneingang 103, zu unterbinden. Das vierte Rückschlagventil 112 weist ein Federelement 116 auf, wodurch das vierte Rückschlagventil 112 als federbelastetes Rückschlagventil ausgebildet ist.

In weiterer Ausgestaltung ist eine in der vierten Leitungsstrecke 102 angeordnete, zweite Verbindungsstelle 118 vorgesehen, über welche das die vierte Leitungsstrecke 102 durchströmende Fluid unter Umgehung des Retarders 38 und der Ventileinrichtung 34 und des Kühlers 64 über einen dritten Sumpfzugang 120 fluidisch mit dem Hydrauliksumpf 80 verbunden ist. Zwischen dem dritten Sumpfzugang 120 und der zweiten Verbindungsstelle 118 ist ein von dem Fluid durchströmbares, fünftes Rückschlagventil 122 angeordnet. Das fünfte Rückschlagventil 122 ist dazu ausgebildet, eine Strömung des Fluids von dem dritten Sumpfzugang 120 zu der zweiten Verbindungsstelle 118 durch das fünfte Rückschlagventil 122 hindurch zuzulassen und eine entgegengesetzte Strömung des Fluids von der zweiten Verbindungsstelle 118 zu dem dritten Sumpfzugang 120 zu unterbinden.

In einer weiteren Ausführungsform weist die Ventileinrichtung 34 einen von dem Steueranschluss 100 beabstandeten, zweiten Steueranschluss 124 auf. Der zweite Steueranschluss 124 ist über eine dritte Verbindungsstelle 126 fluidisch mit der vierten Leitungsstrecke 102 verbunden, wodurch der zweite Steueranschluss 124 mittels des Pumpenelements 18 über den Pumpeneingang 103 und die vierte Leitungsstrecke 102 von dem Fluid beaufschlagbar ist. Das heißt, das die erste Leitungsstrecke 14 durchströmende Fluid kann beispielsweise entgegengesetzt der Strömungsrichtung 27 von dem Pumpenelement 18 angesaugt werden, über den Pumpenausgang 24 durch das Pumpenelement 18 hindurch und über den Pumpeneingang 103 in die vierte Leitungsstrecke 102 eingeleitet werden, wobei das die vierte Leitungsstrecke 102 durchströmende Fluid mittels des Pumpenelements 18 über die dritte Verbindungsstelle 126 dem zweiten Steueranschluss 124 zugeführt wird. Durch das Beaufschlagen des zweiten Steueranschlusses 124 mit dem Fluid beziehungsweise einem Druck des Fluids ist die Ventileinrichtung 34 von der ersten Ventilstellung 30 in die zweite Ventilstellung 32 bewegbar. Dadurch kann das geschlossene Kupplungselement 47 geöffnet werden.

Bei einem insbesondere als Synchronisation bezeichneten Betriebsmodus der Bremseinrichtung 10 befindet sich die Ventileinrichtung 34 zunächst in der zweiten Ventilstellung 32. Mittels des Pumpenelements 18 wird das Fluid aus dem dritten Sumpfzugang 120 aus dem Hydrauliksumpf 80 angesaugt beziehungsweise entnommen und über die zweite Verbindungsstelle 118 durch den Pumpeneingang 103 und den Pumpenausgang 24 in die erste Leitungsstrecke 14 eingeleitet. Das die erste Leitungsstrecke 14 durchströmende Fluid wird mittels des Pumpenelements 18 über die Entnahmestelle 96 zu dem Steueranschluss 100 gefördert, wodurch der Steueranschluss 100 von dem Fluid beziehungsweise von einem Druck des Fluids beaufschlagt wird. Dies ist mittels Pfeilen 129 veranschaulicht. Dadurch wird der Druck des Fluids an dem Steueranschluss 100 mittels des Pumpenelements 18 besonders erhöht, wodurch der Druck des Fluids an dem Steueranschluss 100 größer ist als der Druck des Fluids an dem zweiten Steueranschluss 124. Es liegt somit eine positive Druckdifferenz zwischen den Steueranschlüssen 100, 124 vor. Infolge der positiven Druckdifferenz wird die Ventileinrichtung 34 ausgehend von der zweiten Ventilstellung 32 in Richtung der ersten Ventilstellung 30 bewegt. Infolgedessen wird der Ventilschieber 56 ausgehend von der zweiten Position 54 in Richtung der ersten Position 52 bewegt, wodurch der mechanisch mit dem Ventilschieber 56 gekoppelte Aktuator 58 ausgehend von der zweiten Aktuatorposition 62 in Richtung der ersten Aktuatorposition 60 bewegt wird. Dadurch werden mittels des Kupplungselements 47 jeweilige Drehzahlen der Antriebswelle 48 und des Rotors 42 synchronisiert, insbesondere mittels Sperrsynchronisierung. Wenn die Ventileinrichtung 34 von der zweiten Stellung 32 in die erste Ventilstellung 30 bewegt worden ist, liegt ein Gleichlauf der Drehzahlen der Antriebswelle 48 und des Rotors 42 vor. Darunter kann insbesondere verstanden werden, dass die jeweiligen Drehzahlen des Rotors 42 und der Antriebswelle 48 identisch sind.

In weiterer Ausgestaltung weist der Retarder 38 einen von dem Retarderausgang 82 beabstandeten, zweiten Retarderausgang 128 auf, welcher fluidisch mit einem von dem Fluid durchströmbaren, zweiten Leitungselement 130 verbunden ist. Das dritte Leitungselement 130 ist über eine vierte Verbindungsstelle 132 fluidisch über einen vierten Sumpfzugang 134 mit dem Hydrauliksumpf 80 verbunden. Zwischen der vierten Verbindungsstelle 132 und dem vierten Sumpfzugang 134 ist eine erste Drosselstelle 136 angeordnet. Das Fluid kann aus dem Retarder 38 über den zweiten Retarderausgang 128 abgeführt werden, in das zweite Leitungselement 130 eingeleitet werden und über die vierte Verbindungsstelle 132 und die erste Drosselstelle 136 über den vierten Sumpfzugang 134 in den Hydrauliksumpf 80 eingeleitet werden. Dadurch kann in dem Retarder 38 Druck abgebaut werden beziehungsweise der Retarder 38 kann dadurch entlüftet werden.

In dem in der Fig. 1 und der Fig. 2 gezeigten Ausführungsbeispiel weist der Retarder 38 einen von dem Fluid durchströmbaren und von dem Retarderausgang 82 und dem zweiten Retarderausgang 128 beabstandeten dritten Retarderausgang 138 auf. Der dritte Retarderausgang 138 ist über eine zweite Drosselstelle 140 und über einen fünften Sumpfzugang 142 mit dem Hydrauliksumpf 80 fluidisch verbunden. Dadurch kann das über den dritten Retarderausgang 138 aus dem Retarder 38 abgeführte Fluid über die zweite Drosselstelle 140 und den fünften Sumpfzugang 142 in den Hydrauliksumpf 80 eingeleitet werden.

In einer weiteren Ausführungsform weist die Ventileinrichtung 34 einen von dem Ventileingang 26, dem Ventilausgang 28, dem zweiten Ventileingang 104 und dem zweiten Ventilausgang 106 beabstandeten, dritten Ventileingang 146 auf. In der zweiten Ventilstellung 32 ist der dritte Ventileingang 146, insbesondere über den zweiten Durchgangskanal 108, fluidisch mit dem zweiten Ventilausgang 106 verbunden, wodurch das über den zweiten Retarderausgang 128 aus dem Retarder 38 abgeführte Fluid über das zweite Leitungselement 130, insbesondere die vierte Verbindungsstelle 132, den dritten Ventileingang 146, den zweiten Ventilausgang 106 über den zweiten Sumpfzugang 110 in den Hydrauliksumpf 80 eingeleitet werden kann. In der ersten Ventilstellung 30 ist der dritte Ventileingang 146 nicht fluidisch mit dem zweiten Ventilausgang 106 verbunden, wodurch das Einleiten des Fluids aus dem zweiten Leitungselement 130 über den dritten Ventileingang 146 und den zweiten Ventilausgang 106 über den zweiten Sumpfzugang 110 in den Hydrauliksumpf 80 unterbleibt.

Vorzugsweise ist es bei der Synchronisation vorgesehen, dass vor dem Bewegen der Ventileinrichtung 34 in Richtung der ersten Ventilstellung 30, während sich die Ventileinrichtung 34 in der zweiten Ventilstellung 32 befindet, für einen Druckabbau in dem Retarder 38 das Fluid aus dem Retarder 38 über den zweiten Retarderausgang 128 abgeführt wird, in das zweite Leitungselement 130 eingeleitet wird und über die vierte Verbindungsstelle 132, den dritten Ventileingang 146, den zweiten Ventilausgang 106 und den zweiten Sumpfzugang 110 in den Hydrauliksumpf 80 eingeleitet wird.

Der Synchronisation kann beispielsweise ein insbesondere als Bremsmodus bezeichneter Betriebsmodus der Bremseinrichtung 10 nachfolgen. In dem Bremsmodus wird das Fluid mittels des Pumpenelements 18 aus der vierten Leitungsstrecke 102 angesaugt, wodurch das Fluid über den dritten Sumpfzugang 120 aus dem Hydrauliksumpf entnommen wird, in die vierte Leitungsstrecke 102 eingeleitet wird und über die zweite Verbindungsstelle 118 das Pumpenelement 18 in der ersten Strömungsrichtung 127 durchströmt. Dabei strömt das Fluid über den Pumpeneingang 103 und den Pumpenausgang 24 in die erste Leitungsstrecke 14. Die ist mittels der Pfeile 129 veranschaulicht. Dadurch wird in der ersten Leitungsstrecke 14 mittels des Pumpenelements 18 ein Druck des Fluids aufgebaut, welcher vorzugsweise größer ist als bei der Synchronisation. Dadurch, dass sich die Ventileinrichtung 34 in der ersten Ventilstellung 30 befindet, kann das die erste Leitungsstrecke 14 durchströmende Fluid über den Ventileingang 26 durch den Durchgangskanal 36 hindurch über den Ventilausgang 28 in die zweite Leitungsstrecke 16 eingeleitet werden und somit über den Retardereingang 44 dem Retarder 38 zugeführt werden kann. Somit wird das Fluid in den Retarder 38 eingeleitet. Dadurch kann der Druck des Fluids in dem Retarder 38 besonders erhöht werden, insbesondere gegenüber der Synchronisation. Insbesondere infolge des besonders hohen Drucks des Fluids in dem Retarder 38 wird der Rotor 42 durch das Fluid abgebremst, wodurch infolge der mechanischen Kopplung des Rotors 42 mit der Antriebswelle 48 über das geschlossene Kupplungselement 47 die Antriebswelle 48 verzögert wird. Dadurch kann das Kraftfahrzeug abgebremst werden.

Das Fluid wird in dem Bremsmodus über den Retarderausgang 82 aus dem Retarder 38 abgeführt und in die dritte Leitungsstrecke 68 eingeleitet, durch den Kühler 64 hindurchgeführt und über die Verbindungsstelle 78 erneut in die erste Leitungsstrecke 14 eingeleitet. Dies ist mittels Pfeilen 147 veranschaulicht. Dadurch kann das Fluid in dem Bremsmodus gekühlt werden.

In der dritten Leitungsstrecke 68, insbesondere in dem ersten Streckenabschnitt 70, ist zwischen der Verzweigungsstelle 84 und dem Kühler 64 ein Temperatursensor 148 angeordnet. Der Temperatursensor 148 ist dazu ausgebildet, eine Temperatur des die dritte Leitungsstrecke 68 durchströmenden Fluids zu erfassen. Beispielsweise kann es vorgesehen sein, dass, wenn in dem Bremsmodus die mittels des Temperatursensors 148 erfasste Temperatur des Fluids einen vorgegebenen Schwellenwert der Temperatur überschreitet, ein von der Bremseinrichtung 10, insbesondere des Retarders 38, bewirktes Bremsmoment auf die Antriebswelle 48 begrenzt wird. Dies kann beispielsweise dadurch erfolgen, dass mittels des Pumpenelements 18 ein Massenstrom des von der vierten Leitungsstrecke 102 in die erste Leitungsstrecke 14 geförderten Fluids besonders vermindert wird. In der ersten Leitungsstrecke 14 ist, insbesondere zwischen der Verbindungsstelle 78 und der Entnahmestelle 96, ein Drucksensor 150 angeordnet, mittels welchem ein Druck des die erste Leitungsstrecke 14 durchströmenden Fluids erfassbar ist.

Ein insbesondere als Bereitschaftsmodus bezeichneter Betriebsmodus der Bremseinrichtung 10 kann insbesondere auf den Bremsmodus oder auf die Synchronisation nachfolgen. Dabei wird mittels des Pumpenelements 18 in der ersten Leitungsstrecke 14 der Druck des Fluids, insbesondere gegenüber dem Bremsmodus, besonders reduziert. Beispielsweise wird der Massenstrom des Fluids besonders reduziert, wobei das Pumpenelement 18 bis in seinen Stillstand verzögert werden kann. Dabei ist es vorgesehen, dass in der vierten Leitungsstrecke 102, insbesondere in dem zweiten Steueranschluss 124, kein Druckaufbau, insbesondere gegenüber dem Bremsmodus, erfolgt. Dadurch bleibt die Synchronisation aktiv, das heißt die Drehzahlen der Antriebswelle 48 und des Rotors 42 sind synchron zueinander, wobei das Abbremsen der Antriebswelle 48 durch den Rotor 42 unterbleibt.

Ein insbesondere als Abschaltung bezeichneter Betriebsmodus der Bremseinrichtung 10 kann beispielsweise auf den Bereitschaftsmodus oder auf den Bremsmodus nachfolgen. Dabei wird mittels des Pumpenelements 18 das Fluid über den ersten Sumpfzugang 86 aus dem Hydrauliksumpf 80 angesaugt und dadurch über die Verzweigungsstelle 84 in die dritte Leitungsstrecke 68 eingeleitet. Das die dritte Leitungsstrecke 68 durchströmende Fluid wird infolge des Ansaugens durch den Kühler 64 hindurchgeführt und über den Pumpenausgang 24 in das Pumpenelement 18 eingeleitet und über den Pumpeneingang 103 aus dem Pumpenelement 18 abgeführt und in die vierte Leitungsstrecke 102 eingeleitet. Somit durchströmt das Fluid das Pumpenelement 18 in einer der ersten Strömungsrichtung 127 entgegengesetzten, zweiten Strömungsrichtung 152. Das die vierte Leitungsstrecke 102 durchströmende Fluid wird mittels des Pumpenelements 18 über das vierte Rückschlagventil 112 und über die dritte Verbindungsstelle 126 dem zweiten Steueranschluss 124 zugeführt. Dadurch wird der zweite Steueranschluss 124 von dem Fluid beziehungsweise dem Druck des Fluids beaufschlagt. Infolge der Beaufschlagung ist der Druck des Fluids an dem zweiten Steueranschluss 124 größer als an dem Steueranschluss 100. Somit liegt zwischen den Steueranschlüssen 100, 124 eine negative Druckdifferenz vor. Infolge der Beaufschlagung beziehungsweise der negativen Druckdifferenz wird die Ventileinrichtung 34 von der ersten Ventilstellung 30 in Richtung der zweiten Ventilstellung 32 bewegt. Infolgedessen wird das geschlossene Kupplungselement 47 geöffnet, wodurch die Antriebswelle 48 und der Rotor 42 entkoppelt sind, sodass das Verzögern der Antriebswelle 48 durch den Rotor 42 unterbleibt. Durch das Öffnen des Kupplungselements 47 wird die Synchronisation deaktiviert, das heißt die Drehzahlen der Antriebswelle 48 und des Rotors 42 können unterschiedlich voneinander sein.

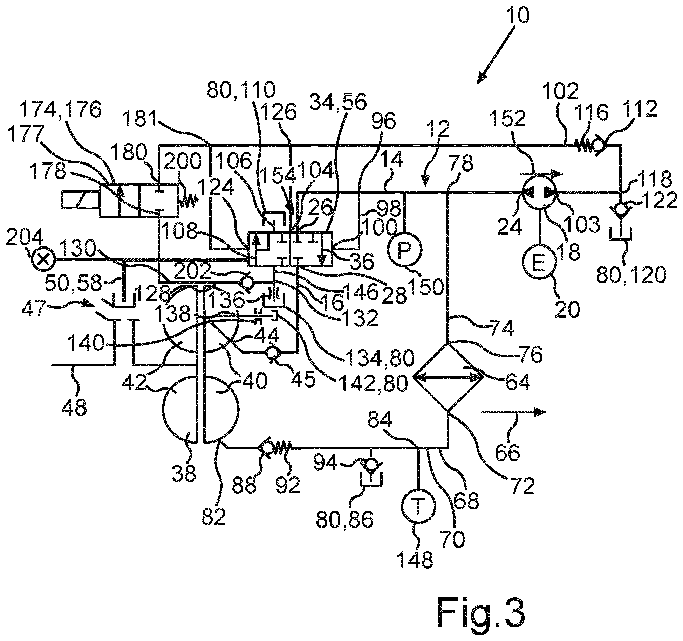

In dem Abschaltmodus befindet sich die Ventileinrichtung 34 vorzugsweise in einer von der ersten und der zweiten Ventilstellung 30, 32 unterschiedlichen, Zwischenstellung 154 beziehungsweise die Ventileinrichtung 34 wird in dem Abschaltmodus in die Zwischenstellung 154 bewegt. Fig. 3 zeigt eine schematische Teilschnittansicht der Bremseinrichtung 10, wobei sich die Ventileinrichtung 34 in der Zwischenstellung 154 befindet. Die Ventileinrichtung 34 befindet sich in der Zwischenstellung 154 zwischen der ersten und der zweiten Ventilstellung 30, 32, worunter insbesondere verstanden werden kann, dass der Ventilschieber 56 zwischen der ersten und der zweiten Position 52, 54 angeordnet ist. In der Zwischenstellung 154 sind die jeweiligen Ventileingänge 26, 106, 146 nicht fluidisch mit den jeweiligen Ventilausgängen 28, 106 verbunden, wodurch die Ventileinrichtung 34, insbesondere der erste und der zweite Durchgangskanal 36, 108, nicht von dem Fluid durchströmt werden kann. Alternativ kann in dem Abschaltmodus die Ventileinrichtung 34 infolge der Beaufschlagung beziehungsweise der negativen Druckdifferenz der ersten Ventilstellung 30 in die zweite Ventilstellung 32 bewegt werden.

Ein insbesondere als Kühlmodus bezeichneter Betriebsmodus kann beispielsweise der Abschaltung nachfolgen. Dabei wird mittels des Pumpenelements 18 der Druck in der vierten Leitungsstrecke 102, insbesondere an dem zweiten Steueranschluss 124, besonders erhöht, wodurch die Ventileinrichtung 34 in die zweite Ventilstellung 32 bewegt wird. Mittels des Pumpenelements 18 wird das Fluid über den ersten Sumpfzugang 86 aus dem Hydrauliksumpf 80 angesaugt und dabei in die dritte Leitungsstrecke 68 eingeleitet. Infolge des Ansaugens wird das Fluid durch den Kühler 64 hindurchgeführt, wodurch das Fluid gekühlt werden kann. Anschließend durchströmt das Fluid über die Verbindungsstelle 78 und die erste Leitungsstrecke 14 das Pumpenelement 18 in der zweiten Strömungsrichtung 152. Dadurch wird das Fluid in die vierte Leitungsstrecke 102 eingeleitet und mittels des Pumpenelements 14 über die dritte Verbindungsstelle 126 dem zweiten Ventileingang 104 zugeführt. Dies ist mittels Pfeilen 155 veranschaulicht. Dadurch, dass sich die Ventileinrichtung 34 in der zweiten Ventilstellung 32 befindet, kann das Fluid anschließend über den zweiten Ventileingang 104 durch den zweiten Durchgangskanal 108 hindurch und über den zweiten Ventilausgang 106 über den zweiten Sumpfzugang 110 in den Hydrauliksumpf 80 eingeleitet werden. Somit kann das Fluid beispielsweise aus dem Getriebe entnommen werden und über den ersten Sumpfzugang 86 aus dem Hydrauliksumpf 80 dem Fluidpfad 12 zugeführt werden, mittels des Kühlers 64 gekühlt werden und anschließend über den zweiten Sumpfzugang 110 und dem Hydrauliksumpf 80 in das Getriebe rückgeführt werden.

In einer weiteren Ausführungsform weist die Bremseinrichtung eine Abschalteinrichtung 174 auf. Die Abschalteinrichtung 174 ist dazu ausgebildet, den Druck des Fluids in der vierten Leitungsstrecke 102, insbesondere besonders schnell, besonders zu erhöhen, wodurch der zweite Steueranschluss 124, mit dem Druck des Fluids beaufschlagt werden kann, wodurch die Ventileinrichtung 34, insbesondere besonders schnell, von der ersten Ventilstellung 30 in die zweite Ventilstellung 32 bewegt wird.

In dem in den Fig. 1-3 gezeigten Ausführungsbeispiel ist die die Abschalteinrichtung 174 als hydraulische Abschalteinrichtung 176 ausgebildet. Dabei weist die hydraulische Abschalteinrichtung 176 ein elektrisches Schaltventil 177 mit einem von dem Fluid durchströmbaren Eingang 178 und einem von dem Fluid durchströmbaren Ausgang 180 auf, welcher fluidisch mit dem zweiten Steueranschluss 124 verbunden beziehungsweise verbindbar ist. Das elektrische Schaltventil 177 ist zwischen wenigstens zwei Stellungen bewegbar, wobei in einer ersten der Stellungen der Eingang 178 und der Ausgang 180 fluidisch verbunden sind, wodurch das Fluid von dem Eingang 178 durch das elektrische Schaltventil 177 hindurch zu dem Ausgang 180 strömen kann, und in der zweiten Stellung ist der Eingang 178 nicht fluidisch mit dem Ausgang 180 verbunden, wodurch das Durchströmen des elektrischen Schaltventils mit dem Fluid unterbleibt. In den Fig. 1-3 ist das Schaltventil 177 der hydraulischen Abschalteinrichtung 176 in der zweiten Stellung dargestellt.

Der Eingang 178 ist über das dritte Leitungselement 130 fluidisch mit dem dritten Retarderausgang 138 verbunden. Dabei kann bei einem insbesondere als Schnellabschaltung bezeichneten Betriebsmodus, welcher beispielsweise auf den Bremsmodus folgen kann, das elektrische Schaltventil 177 der hydraulischen Abschalteinrichtung 176 von der zweiten Stellung in die erste Stellung bewegt werden. Dadurch kann das aus dem Retarder 38 über den dritten Retarderausgang 138 abgeführte Fluid durch das elektrische Schaltventil 177 hindurch, insbesondere über den Eingang 178 und den Ausgang 180, geführt werden, in die vierte Leitungsstrecke 102 eingeleitet werden und dem zweiten Steueranschluss 124 zugeführt werden, wodurch der Druck in der vierten Leitungsstrecke 102, insbesondere in dem zweiten Steueranschluss 124, besonders erhöht werden kann. Hierfür ist der Ausgang 180 über eine fünfte Verbindungsstelle 181 fluidisch mit der vierten Leitungsstrecke 102 verbunden. Insbesondere dadurch, dass der Druck an dem zweiten Steueranschluss 124 dann größer ist als der Druck des Fluids an dem ersten Steueranschluss 100, kann die Ventileinrichtung 34 von der ersten Ventilstellung 30 in die zweite Ventilstellung 32 bewegt werden. Dadurch wird das Kupplungselement 47 geöffnet.

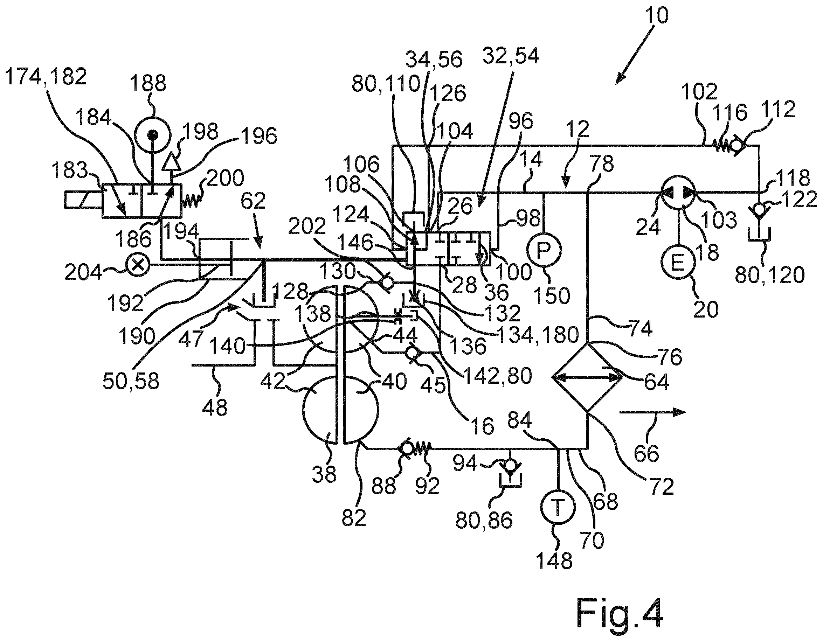

Alternativ kann die Abschalteinrichtung 176 als pneumatische Abschalteinrichtung 182 ausgebildet sein. Fig. 4 zeigt in einer schematischen Teilschnittansicht die Bremseinrichtung 10, wobei sich die Ventileinrichtung 34 in der zweiten Ventilstellung 32 befindet und die Abschalteinrichtung 176 als pneumatische Abschalteinrichtung 182 ausgebildet ist. Die pneumatische Abschalteinrichtung 182 weist ein elektrisches Schaltventil 183 auf, welches zwischen wenigstens zwei Stellungen bewegbar ist und einen von Luft durchströmbaren Eingang 184 und einen von Luft durchströmbaren, von dem Eingang beabstandeten, Ausgang 186 umfasst. Der Eingang 184 ist fluidisch mit einem Druckluftreservoir 188 verbunden, mittels welchem die pneumatische Abschalteinrichtung 182, insbesondere der Eingang 184, mit Druckluft versorgbar ist. Die pneumatische Abschalteinrichtung 182 weist einen pneumatischen Zylinder 190 auf, in welchem ein Kolbenelement 192 translatorisch bewegbar aufgenommen ist. Das Kolbenelement 192 kann dabei translatorisch relativ zu einer Zylinderwand des pneumatischen Zylinders 190 zwischen einer ersten Kolbenstellung und einer zweiten Kolbenstellung bewegt werden. Der Zylinder 190 weist eine von der Luft beziehungsweise der Druckluft durchströmbare Öffnung 194 auf, welche fluidisch mit dem Ausgang 186 verbunden ist. Das Kolbenelement 192 ist mit der Ventileinrichtung 34, insbesondere dem Ventilschieber 56 und/oder der Koppeleinrichtung 50, mechanisch verbunden beziehungsweise gekoppelt. In der Fig. 4 ist das elektrische Schaltventil 183 der pneumatischen Abschalteinrichtung 182 in der zweiten Stellung dargestellt.

In einer ersten der Stellungen des elektrischen Schaltventils 183 ist der Eingang 184 fluidisch mit dem Ausgang 186 verbunden, wodurch die Luft aus dem Druckluftreservoir 188 über den Eingang 184, durch das elektrische Schaltventil 183 hindurch, den Ausgang 186, durch die Öffnung 194 hindurch in den Zylinder 190 einleitbar ist, wodurch das Kolbenelement 192 von der Druckluft beaufschlagt wird. In der zweiten der Stellungen ist der Eingang 184 nicht fluidisch mit dem Ausgang 186 verbunden, wodurch das elektrische Schaltventil 183 nicht von der Druckluft durchströmt werden kann und das Beaufschlagen des Kolbenelements192 mit der Druckluft unterbleibt. Durch das Beaufschlagen des Kolbenelements 192 mit der Druckluft wird das Kolbenelement 192 von der ersten Kolbenstellung in die zweite Kolbenstellung bewegt. Dadurch, dass das Kolbenelement 192 und die Ventileinrichtung 34 mechanisch gekoppelt sind, wird beim Bewegen des Kolbenelements 192 in die zweite Kolbenstellung die Ventileinrichtung von der ersten Ventilstellung 30 in die zweite Ventilstellung 32 bewegt. In der Fig. 4 befindet sich das Kolbenelement 192 in der zweiten Kolbenstellung.

Die pneumatische Abschalteinrichtung 182 weist einen von der Luft durchströmbaren, von dem Eingang 184 und dem Ausgang 186 beabstandeten, zweiten Ausgang 196 auf, welcher fluidisch mit einer Entlüftungseinrichtung 198 verbunden ist. In der zweiten Stellung des elektrischen Schaltventils 183 ist der Ausgang 186 fluidisch mit dem zweiten Ausgang 196 verbunden, wodurch die Luft aus dem Zylinder 190 abführbar und über den Ausgang 186 und den zweiten Ausgang 196 der Entlüftungseinrichtung 198 zuführbar ist. Dadurch kann das der Zylinder 190 mittels der Entlüftungseinrichtung 198 entlüftet werden.

Die Abschalteinrichtung 174, insbesondere die hydraulische und die pneumatische Abschalteinrichtung 176, 182, weist wenigstens ein Federelement 200 auf, mittels welchem die Abschalteinrichtung 174 von der zweiten Stellung in die erste Stellung bewegt werden kann.

In dem in dem in den Fig. 1-3 gezeigten Ausführungsbeispiel ist in dem dritten Leitungselement 130 zwischen dem dritten Retarderausgang 138 und der vierten Verbindungsstelle 132 ein von dem Fluid durchströmbares, sechstes Rückschlagventil 202 angeordnet. Das sechste Rückschlagventil 202 ist dazu ausgebildet, eine Strömung des Fluids von dem dritten Retarderausgang 128 und/oder von dem Eingang 178 durch das sechste Rückschlagventil 202 hindurch zu der vierten Verbindungsstelle 132 zuzulassen und eine entgegengesetzte Strömung des Fluids von der vierten Verbindungsstelle 132 zu dem dritten Retarderausgang 128 und/oder zu dem Eingang 178 zu unterbinden.

Die Bremseinrichtung weist einen Wegsensor 204 auf, welcher dazu ausgebildet ist die jeweilige Ventilstellung 30, 32 und/oder die jeweilige Position 52, 54 und/oder die jeweilige Aktuatorposition 60, 62 zu erfassen.

### Bezugszeichenliste

- 10: Bremseinrichtung
- 12: Fluidpfad
- 14: erste Leitungsstrecke
- 16: zweite Leitungsstrecke
- 18: Pumpenelement
- 20: Elektromotor
- 24: Pumpenausgang
- 26: Ventileingang
- 27: Strömungsrichtung
- 28: Ventilausgang
- 30: erste Ventilstellung
- 32: zweite Ventilstellung
- 34: Ventileinrichtung
- 36: Durchgangskanal
- 38: Retarder
- 40: Stator
- 42: Rotor
- 44: Retardereingang
- 45: erstes Rückschlagventil
- 46: Strömungsrichtung
- 47: Kupplungselement
- 48: Antriebswelle
- 50: Koppeleinrichtung
- 52: erste Position
- 54: zweite Position
- 56: Ventilschieber
- 58: Aktuator
- 60: erste Aktuatorposition
- 62: zweite Aktuatorposition
- 64: Kühler
- 66: Wärme
- 68: dritte Leitungsstrecke
- 70: erster Streckenabschnitt
- 72: Kühlereingang
- 74: zweiter Streckenabschnitt
- 76: Kühlerausgang
- 78: Verbindungsstelle
- 80: Hydrauliksumpf
- 82: Retarderausgang
- 84: Verzweigungsstelle
- 86: erster Sumpfzugang
- 88: zweites Rückschlagventil
- 90: Strömungsrichtung
- 92: Federelement
- 94: drittes Rückschlagventil
- 96: Entnahmestelle
- 98: erstes Leitungselement
- 100: Steueranschluss
- 102: vierte Leitungsstrecke
- 103: Pumpeneingang
- 104: zweiter Ventileingang
- 106: zweiter Ventilausgang
- 108: zweiter Durchgangskanal
- 110: zweiter Sumpfzugang
- 112: viertes Rückschlagventil
- 114: Strömungsrichtung
- 116: Federelement
- 118: zweite Verbindungsstelle
- 120: dritter Sumpfzugang
- 122: fünftes Rückschlagventil
- 124: zweiter Steueranschluss
- 126: dritte Verbindungsstelle
- 127: erste Strömungsrichtung
- 128: zweiter Retarderausgang
- 129: Pfeile
- 130: zweites Leitungselement
- 132: vierte Verbindungsstelle
- 134: vierter Sumpfzugang
- 136: erste Drosselstelle
- 138: dritter Retarderausgang
- 140: zweite Drosselstelle
- 142: fünfter Sumpfzugang
- 146: dritter Ventileingang
- 147: Pfeile
- 148: Temperatursensor
- 150: Drucksensor
- 152: zweite Strömungsrichtung
- 154: Zwischenstellung
- 155: Pfeile
- 174: Abschalteinrichtung
- 176: hydraulische Abschalteinrichtung
- 177: Schaltventil
- 178: Eingang
- 180: Ausgang
- 181: fünfte Verbindungsstelle
- 182: pneumatische Abschalteinrichtung
- 183: Schaltventil
- 184: Eingang
- 186: Ausgang
- 188: Druckluftreservoir
- 190: Zylinder
- 192: Kolbenelement
- 194: Öffnung
- 196: Zweiter Ausgang
- 198: Entlüftungseinrichtung
- 200: Federelement
- 202: sechstes Rückschlagventil
- 204: Wegsensor

## Patentansprüche

1. Bremseinrichtung (10) für ein Kraftfahrzeug, mit einem von einem Fluid durchströmbaren und wenigstens zwei Leitungsstrecken (14, 16) aufweisenden Fluidpfad (12), in welchem wenigstens ein Pumpenelement (18) zum Hindurchfördern des Fluids durch den Fluidpfad (12) und wenigstens eine von dem Fluid durchströmbare, wenigstens einen Ventileingang (26) und einen Ventilausgang (28) aufweisende und zwischen wenigstens zwei Ventilstellungen (30, 32) bewegbare Ventileinrichtung (34) angeordnet ist, welche über den Ventileingang (26) mittels einer ersten Leitungsstrecke (14) der Leitungsstrecken (14, 16) fluidisch mit dem Pumpenelement (18) verbunden ist, mit einem Retarder (38), welcher einen Stator (40), einen separat von dem Stator (40) ausgebildeten Rotor (42) und einen Retardereingang (44) aufweist, über welchen der Retarder (38) mittels einer zweiten Leitungsstrecke (16) der Leitungsstrecken (14, 16) fluidisch über den Ventilausgang (28) mit der Ventileinrichtung (34) verbunden ist, wobei in einer ersten der Ventilstellungen (30) der Ventileingang (26) mit dem Ventilausgang (28) fluidisch verbunden ist, wodurch das die erste Leitungsstrecke (14) durchströmende Fluid durch die Ventileinrichtung (34) hindurch, über das zweite Leitungselement (16) dem Retardereingang (44) zuführbar ist, und in der zweiten Ventilstellung (32) der Ventileingang (26) nicht fluidisch mit dem Ventilausgang (28) verbunden ist,
**gekennzeichnet durch**
wenigstens ein Kupplungselement (47), über welches der Rotor (42) mit einer Antriebswelle (48) des Kraftfahrzeugs koppelbar und von der Antriebswelle (48) entkoppelbar ist, und eine Koppeleinrichtung (50), mittels welcher der Rotor (42) und die Antriebswelle (48) durch das Bewegen der Ventileinrichtung (34) in die erste Ventilstellung (30) über das Kupplungselement (47) koppelbar sind und durch das Bewegen des Ventileinrichtung (34) in die zweite Ventilstellung (32) entkoppelbar sind.

2. Bremseinrichtung (10) nach Anspruch 1
**dadurch gekennzeichnet, dass**
die Ventileinrichtung (34) einen zwischen wenigstens zwei Positionen (52, 54) bewegbaren Ventilschieber (56) aufweist, welcher in der ersten Ventilstellung (30) in einer ersten der Positionen (52) angeordnet ist und in der zweiten Ventilstellung in der zweiten der Positionen (54) angeordnet ist, und die Koppeleinrichtung (50) als mechanisch mit dem Ventilschieber (56) gekoppelter Aktuator (58) ausgebildet ist, welcher zwischen wenigstens zwei Aktuatorpositionen (60, 62) bewegbar ist, wobei der Aktuator (58) durch Bewegen des Ventilschiebers (56) in die erste Position (52) in eine erste der Aktuatorpositionen (60) bewegbar ist, wodurch der Rotor (42) und die Abtriebswelle (48) über das Kupplungselement (47) gekoppelt sind, und durch das Bewegen des Ventilschiebers (56) in die zweite Position (54) in eine zweite der Aktuatorpositionen (62) bewegbar ist, wodurch der Rotor (42) und die Abtriebswelle (48) entkoppelt sind.

3. Bremseinrichtung (10) nach Anspruch 1 oder 2,
**gekennzeichnet durch**
wenigstens einen in dem Fluidpfad (12) angeordneten und von dem Fluid durchströmbaren Kühler (64), mittels welchem Wärme (66) von dem Fluid abführbar ist, und/oder einen fluidisch mit dem Fluidpfad (12) verbindbaren Hydrauliksumpf (80).

4. Bremseinrichtung (10) nach Anspruch 3,
**dadurch gekennzeichnet, dass**
der Kühler (64) in einer separat von der ersten und der zweiten Leitungsstrecke (14, 16) ausgebildeten, dritten Leitungsstrecke (68) des Fluidpfads (12) angeordnet ist, wobei die dritte Leitungsstrecke (68) über eine Verbindungsstelle (78) mit der ersten Leitungsstrecke (14) fluidisch verbunden ist, sodass das die erste Leitungsstrecke (14) durchströmende Fluid unter Umgehung des Kühlers (64) zu dem Ventileingang (26) förderbar ist.

5. Bremseinrichtung (10) nach Anspruch 4,
**dadurch gekennzeichnet, dass**
die dritte Leitungsstrecke (68) fluidisch mit einem Retarderausgang (82) des Retarders (38) verbunden ist, wodurch das Fluid über den Retarderausgang (82) aus dem Retarder (38) abführbar und dem Kühler (64) zuführbar ist, wobei in der dritten Leitungsstrecke (68) eine Verzweigungsstelle (84) angeordnet ist, über welche der Kühler (64) unter Umgehung des Pumpenelements (18), des Retarders (38) und der Ventileinrichtung (34) fluidisch mit dem Hydrauliksumpf (80) verbunden ist.

6. Bremseinrichtung (10) nach einem der vorhergehenden Ansprüche,
**dadurch gekennzeichnet, dass**
die erste Leitungsstrecke (14) eine Entnahmestelle (96) aufweist, über welche das Pumpenelement (18) fluidisch mit einem Steueranschluss (100) der Ventileinrichtung (34) verbunden ist, wodurch der Steueranschluss (100) mittels des Pumpenelements (18) von dem Fluid beaufschlagbar ist, wodurch die Ventileinrichtung (134) von der zweiten Ventilstellung (32) in die erste Ventilstellung (30) bewegbar ist.

7. Bremseinrichtung (10) nach einem der vorhergehenden Ansprüche,
**dadurch gekennzeichnet, dass**
der Fluidpfad (12) eine separat von den Leitungsstrecken (14, 16, 68) ausgebildete und von dem Fluid durchströmbare, vierte Leitungsstrecke (102) umfasst, über welche das Pumpenelement (18) und die Ventileinrichtung (134) unter Umgehung der ersten Leitungsstrecke (14), des Retarders (38), des Ventileingangs (26) und des Ventilausgangs (28) fluidisch verbunden sind.

8. Bremseinrichtung (10) nach Anspruch 7,
**dadurch gekennzeichnet, dass**
die Ventileinrichtung (34) wenigstens einen von dem Ventileingang (26) beabstandeten und fluidisch mit der vierten Leitungsstrecke (102) verbundenen, zweiten Ventileingang (104) und wenigstens einen von dem Ventilausgang (28) beabstandeten und fluidisch mit dem Hydrauliksumpf (80) verbundenen, zweiten Ventilausgang (106) aufweist, wobei in der zweiten Ventilstellung (32) das die vierte Leitungsstrecke (102) durchströmende Fluid über den zweiten Ventileingang (104), durch die Ventileinrichtung (34) hindurch, über den zweiten Ventilausgang (106) in den Hydrauliksumpf (80) einleitbar ist.

9. Bremseinrichtung (10) nach Anspruch 7 oder 8,
**gekennzeichnet durch**,
eine in der vierten Leitungsstrecke (102) angeordnete, zweite Verbindungsstelle (118), über welche das die vierte Leitungsstrecke (102) durchströmende Fluid unter Umgehung des Retarders (38) und der Ventileinrichtung (34) mit dem Hydrauliksumpf (80) fluidisch verbunden ist.

10. Bremseinrichtung (10) nach einem der Ansprüche 7 bis 9,
**dadurch gekennzeichnet, dass**
die Ventileinrichtung (34) wenigstens einen von dem Steueranschluss (100) beabstandeten und fluidisch mit der vierten Leitungsstrecke (102) verbundenen, zweiten Steueranschluss (124) aufweist, welcher mittels des Pumpenelements (18) über die vierte Leitungsstrecke (102) von dem Fluid beaufschlagbar ist, wodurch die Ventileinrichtung (34) von der ersten Stellung (30) in die zweite Stellung (32) bewegbar ist.

## Claims

1. A braking device (10) for a motor vehicle, comprising a fluid path (12) through which a fluid can flow and which has at least two conduit sections (14, 16) and in which at last one pump element (18) for conveying the fluid through the fluid path (12), and at least one valve device (34) fluidly connected to the pump element (18) via the valve inlet (26) by means of a first conduit section (14) of the conduit sections (14, 16) and through which the fluid can flow and which has at least one valve inlet (26) and one valve outlet (28) and which can be moved between at least two valve positions (30, 32) is disposed, comprising a retarder (38) having a stator (40), a rotor (42) configured separately from the stator (40), and retarder inlet (44), via which the retarder (38) is fluidly connected to the valve device (34) by means of a second conduit section (16) of the conduit sections (14, 16) via the valve outlet (28), wherein, in a first one of the valve positions (30), the valve inlet (26) is fluidly connected to the valve outlet (28), whereby the fluid flowing through the first conduit section (14) can be delivered to the retarder inlet (44) via the second conduit element (16), and, in the second valve position (32), the valve inlet (26) is not fluidly connected to the valve outlet (28),
**characterised by**
at least one clutch element (47), via which the rotor (42) can be coupled with a drive shaft (48) of the motor vehicle and can be decoupled from the drive shaft (48), and a coupling device (50), by means of which the rotor (42) and the drive shaft (48) can be coupled via the clutch element (47) by moving the valve device (34) into the first valve positon (30), and can be decoupled by moving the valve device (34) into the second valve position (32).

2. The braking device (10) according to claim 1,
**characterised in that**
the valve device (34) has a valve spool (56) which can be moved between at least two positions (52, 54) and which, in the first valve position (30), is disposed in a first of the positions (52) and which, in the second valve position, is disposed in the second of the positions (54), and the coupling device (50) is configured as an actuator (58) mechanically coupled with the valve spool (56) and which can be moved between at least two actuator positions (60, 62), wherein the actuator (58) can be moved into a first one of the actuator positions (60) by moving the valve spool (56) into the first position (52), whereby the rotor (42) and the drive shaft (48) are coupled via the coupling element (47), and which can be moved into a second one of the actuator positions (62) by moving the valve spool (56) into the second position (54), whereby the rotor (42) and the drive shaft (48) are decoupled.

3. The braking device (10) according to claim 1 or 2,
**characterised by**
at least one cooler (64) disposed in the fluid path (12) and through which the fluid can flow and by means of which heat (66) can be removed from the fluid, and/or a hydraulic sump (80) which can be fluidly connected to the fluid path (12).

4. The braking device (10) according to claim 3,
**characterised in that**
the cooler (64) is disposed in a third conduit section (68) of the fluid path (12) configured separately from the first and the second conduit section (14,16), wherein the third conduit section (68) is fluidly connected to the first conduit section (14) via a connection point (78), so that the fluid flowing through the first conduit rout (14) can be conveyed to the valve inlet (26) while bypassing the cooler (64).

5. The braking device (10) according to claim 4,
**characterised in that**
the third conduit section (68) is fluidly connected to a retarder outlet (82) of the retarder, whereby the fluid can be removed from the retarder (38) via the retarder outlet (82) and delivered to the cooler (64), wherein a branching point (84), via which the cooler (64) is fluidly connected to the hydraulic sump (80) while bypassing the pump element (18), the retarder (38), and the valve device (34), is disposed in the third conduit section (68).

6. The braking device (10) according to one of the preceding claims,
**characterised in that**
the first conduit section (14) has a draw-off point (96), via which the pump element (18) is fluidly connected to a control port (100) of the valve device (34), whereby the control port (100) can be supplied with the fluid by means of the pump element (18), whereby the valve device (134) can be moved from the second valve position (32) to the first valve position (30).

7. The braking device (10) according to one of the preceding claims,
**characterised in that**
the fluid path (12) includes a fourth conduit section (102) configured separately from the conduit sections (14, 16, 68) and through which the fluid can flow, and via which the pump element (18) and the valve device (134) are fluidly connected while bypassing the first conduit section (14), the retarder (38), the valve inlet (26), and the valve outlet (28).

8. The braking device (10) according to claim 7,
**characterised in that**
the valve device (34) has at least one second valve inlet (104) spaced apart from the valve inlet (26) and fluidly connected to the fourth conduit section (102), and at least one second valve outlet (106) spaced apart from the valve outlet (28) and fluidly connected to the hydraulic sump (80), wherein, in the second valve position (32), the fluid flowing through the fourth conduit section (102) can be introduced into the hydraulic sump (80) via the second valve outlet (106), through the valve device (34) and via the second valve outlet (106).

9. The braking device (10) according to claim 7 or 8,
**characterised by**
a second connection point (118) disposed in the fourth conduit section (102) and via which the fluid flowing through the fourth conduit section (102) is fluidly connected to the hydraulic sump (80) while bypassing the retarder (38) and the valve device (34).

10. The braking device (10) according to one of claims 7 to 9,
**characterised in that**
the valve device (34) has at least one second control port (124) spaced apart from the control port (100) and fluidly connected to the fourth conduit section (102) and which can be supplied with the fluid by means of the pump element (18) via the fourth conduit section (102), whereby the valve device (34) can be moved from the first position (30) to the second position (32).

## Revendications

1. Dispositif de freinage (10) pour un véhicule automobile, comprenant un chemin d'écoulement de liquide (12) pouvant acheminer un liquide et présentant au moins deux segments de conduite (14, 16), dans lequel sont disposés au moins un élément de pompe (18) permettant de faire passer le liquide à travers le chemin d'écoulement (12) et au moins un dispositif de soupape (34) pouvant acheminer le liquide, présentant au moins une entrée de soupape (26) et une sortie de soupape (28) et pouvant se déplacer entre au moins deux positions de soupape (30, 32), lequel est raccordé fluidiquement à l'élément de pompe (18) par l'intermédiaire de l'entrée de soupape (26) au moyen d'un premier segment de conduite (14) des segments de conduite (14, 16), avec un ralentisseur (38) qui présente un stator (40), un rotor (42) réalisé séparément du stator (40) et une entrée de ralentisseur (44) par lesquels le ralentisseur (38) est raccordé fluidiquement au dispositif de soupape (34) par l'intermédiaire de la sortie de soupape (28) au moyen d'un deuxième segment de conduite (16) des segments de conduite (14, 16),
dans lequel dans une première des positions de soupape (30), l'entrée de soupape (26) est raccordée fluidiquement à la sortie de soupape (28), ce qui permet au liquide s'écoulant à travers le premier segment de conduite (14) peut être amené à travers le dispositif de soupape (34), par le deuxième segment de conduite (16), à l'entrée de ralentisseur (44), et dans la deuxième position de soupape (32), l'entrée de soupape (26) n'est pas raccordée fluidiquement à la sortie de soupape (28),
**caractérisé par**
au moins un élément d'accouplement (47), par l'intermédiaire duquel le rotor (42) peut être accouplé à un arbre d'entraînement (48) du véhicule automobile et peut être désaccouplé de l'arbre d'entraînement (48), et un dispositif d'accouplement (50) au moyen duquel le rotor (42) et l'arbre d'entraînement (48) peuvent être accouplés par le mouvement du dispositif de soupape (34) dans la position de soupape (30) par l'élément d'accouplement (47) et peuvent être désaccouplés par le mouvement du dispositif de soupape (34) dans la deuxième position de soupape (32).

2. Dispositif de freinage (10) selon la revendication 1,
**caractérisé en ce que**
le dispositif de soupape (34) comporte un tiroir de soupape (56) pouvant se déplacer entre au moins deux positions (52, 54), lequel est disposé dans une première des positions (52) lorsque la soupape (30) est dans la première position et est disposé dans la deuxième des positions (54) lorsque la soupape est dans la deuxième position, et le dispositif d'accouplement (50) est réalisé sous forme d'actionneur (58) couplé mécaniquement au tiroir de soupape (56), lequel peut se déplacer entre au moins deux positions d'actionneur (60, 62), l'actionneur (58) pouvant être déplacé dans une première des positions d'actionneur (60) par le déplacement du tiroir de soupape (56) dans la première position (52), le rotor (42) et l'arbre de sortie (48) étant ainsi accouplés par l'intermédiaire de l'élément d'accouplement (47), et pouvant être déplacé dans une deuxième des positions d'actionneur (62) par le déplacement du tiroir de soupape (56) dans la deuxième position (54), ce qui permet l'accouplement du rotor (42) et de l'arbre de sortie (48).

3. Dispositif de freinage (10) selon la revendication 1 ou 2,
**caractérisé par**
au moins un refroidisseur (64) disposé dans le chemin d'écoulement de liquide (12) et qui peut être traversé par le liquide, au moyen duquel la chaleur (66) peut être évacuée du liquide, et/ou un carter hydraulique (80) pouvant être relié fluidiquement au chemin d'écoulement de liquide (12).

4. Dispositif de freinage (10) selon la revendication 3,
**caractérisé en ce que**
le refroidisseur (64) est disposé dans un segment de conduite séparée du premier et du deuxième segment de conduite (14, 16) du chemin d'écoulement de liquide (12), dans lequel le troisième segment de conduite (68) est raccordé fluidiquement au premier segment de conduite (14) par un point de raccordement (78), ce qui permet au liquide qui traverse le premier segment de conduite (14) d'être transporté vers l'entrée de soupape (26) en contournant le refroidisseur (64).

5. Dispositif de freinage (10) selon la revendication 4,
**caractérisé en ce que**
le troisième segment de conduite (68) est raccordé fluidiquement à une sortie de ralentisseur (82) du ralentisseur (38), ce qui permet d'évacuer le liquide du ralentisseur (38) par la sortie de ralentisseur (82) et de l'amener au refroidisseur (64), dans lequel dans le troisième segment de conduite (68) est disposé un point de ramification (84) auquel le refroidisseur (64) est raccordé fluidiquement au carter hydraulique (80) en contournant l'élément de pompe (18), le ralentisseur (38) et le dispositif de soupape (34).

6. Dispositif de freinage (10) selon l'une des revendications précédentes,
**caractérisé en ce que**
le premier segment de conduite (14) présente un point de prélèvement (96) auquel l'élément de pompe (18) est raccordé fluidiquement à un raccord de commande (100) du dispositif de soupape (34), ce qui permet au raccord de commande (100) de pouvoir être alimenté en liquide au moyen de l'élément de pompe (18), le dispositif de soupape (134) pouvant être ainsi déplacé de la deuxième position de soupape (32) à la première position de soupape (30).

7. Dispositif de freinage (10) selon l'une des revendications précédentes,
**caractérisé en ce que**
le chemin d'écoulement de liquide (12) comprend un quatrième segment de conduite (102) séparé des segments de conduite (14, 16, 68) et pouvant être traversé par le liquide, lequel quatrième segment permet de raccorder fluidiquement l'élément de pompe (18) et le dispositif de soupape (134) en contournant le premier segment de conduite (14), le ralentisseur (38), l'entrée de soupape (26) et la sortie de soupape (28).

8. Dispositif de freinage (10) selon la revendication 7,
**caractérisé en ce que**
le dispositif de soupape (34) comprend au moins une deuxième entrée de soupape (104) distante de l'entrée de soupape (26) et relié fluidiquement au quatrième segment de conduite (102) et au moins une deuxième sortie de soupape (106) espacée de la sortie de soupape (28) et raccordée fluidiquement au carter hydraulique (80), dans la deuxième position de soupape (32), dans lequel dans la deuxième position de la soupape (32), le liquide s'écoulant à travers le quatrième segment de conduite (102) passe par la deuxième entrée de soupape (104), à travers le dispositif de soupape (34), peut être introduit dans le carter hydraulique (80) par la deuxième sortie de soupape (106).

9. Dispositif de freinage (10) selon la revendication 7 ou 8,
**caractérisé par**
un deuxième point de raccordement (118) disposé dans le quatrième segment de conduite (102), par lequel le liquide traversant le quatrième segment de conduite (102) est raccordé fluidiquement au carter hydraulique (80) en contournant le ralentisseur (38) et le dispositif de soupape (34).

10. Dispositif de freinage (10) selon l'une quelconque des revendications 7 à 9, **caractérisé en ce que**
le dispositif de soupape (34) comporte au moins un deuxième raccord de commande (124) espacé du raccord de commande (100) et raccordé fluidiquement au quatrième segment de conduite (102), lequel peut être alimenté en liquide au moyen de l'élément de pompe (18) par l'intermédiaire du quatrième segment de conduite (102), ce qui permet de déplacer le dispositif de soupape (34) de la première position (30) à la deuxième position (32).
